# EUROPEAN PATENT SPECIFICATION

(11) **EP 0 873 629 B1**
(45) Date of publication and mention of the grant of the patent: **28.03.2001**
(21) Application number: 96944173.2
(22) Date of filing: 23.12.1996
(51) Int. Cl.: H04L 12/64, H04L 12/40, H04L 12/42

(54) **METHOD AND ARRANGEMENT FOR NETWORK RESOURCE ADMINISTRATION**
VERFAHREN UND ANORDNUNG ZUR VERWALTUNG VON NETZWERKBETRIEBSMITTELN
PROCEDE ET STRUCTURE DE GESTION DES RESSOURCES D'UN RESEAU

(30) Priority: 28.12.1995 SE 9504681
(43) Date of publication of application: 28.10.1998
(73) Proprietor: Dynarc AB, 171 43 Solna (SE)
(72) Inventor: BOHM, Christer, S-118 48 Stockholm (SE); LINDGREN, Per, S-118 52 Stockholm (SE); RAMFELT, Lars, S-164 40 Kista (SE); HIDELL, Markus, S-181 42 Lidingö (SE); SJÖDIN, Peter, S-753 32 Uppsala (SE)
(74) Representative: Hopfgarten, Nils
(86) International application number: PCT/SE96/01750
(87) International publication number: WO 97/24846

(56) References cited:
- EP-A- 0 451 426
- SE-B- 460 750
- US-A- 4 553 234
- COMPUTER NETWORKS AND ISDN SYSTEMS, Volume 24, No. 2, April 1992, (Amsterdam), LARS GAUFFIN, "Multi-gigabit Networking Based on DTM", pages 119-130.
- IEEE JOURNAL ON SELECTED AREAS IN COMMUNICATIONS, Volume 14, No. 2, February 1996, (USA), C. BOHM et al., "Fast Circuit Switching for the Next Generation of High Performance Networks", pages 298-305.

## Description

### Technical Field of the Invention

The present invention relates in a first aspect to a method for centralized management of the capacity in a circuit-switched network with a bus or ring structure, and to a circuit-switched network of a bus or ring structure for performing the method.

In a second aspect the present invention also relates to a method for distributed management of the capacity in a circuit-switched network with a bus or ring structure, and to a circuit-switched network of a bus or ring structure for performing the method.

The present invention also relates to a node control unit in a node in a circuit-switched network with a bus or ring structure.

The present invention also relates to a node, also called server node, in a circuit-switched network with a bus or ring structure.

### Description of Related Art

DTM, Dynamic synchronous Transfer Mode, is a broadband network architecture based on fast circuit-switching augmented with dynamic reallocation of resources. It provides a service based on multicast, multi-rate channels with short set-up delay, and supports applications with real-time requirements on quality of service as well as applications with bursty, asynchronous traffic. This application describes the DTM architecture and its distributed resource management scheme. Performance analysis results from network simulations are presented. The analysis is performed with respect to throughput and access delay for two network topologies: a dual bus and a grid of dual buses. The effects of varying user requirements, inter-node distance and transfer size are studied for uniform traffic patterns. The results indicate that the overhead for establishing channels is low (a few hundred microseconds), which gives a high degree of utilization even for short transfers. The analysis also shows that when channels are established very frequently, the signaling capacity limits the performance.

The next generation of networks will integrate services for different kinds of applications: delay-insensitive asynchronous applications like fax, mail, and file transfer, and delay-sensitive applications with real-time requirements, such as audio and video. These different applications have traditionally been supported by different network technologies. Asynchronous communication has been provided by computer networks, which are packet-switched and use store-and-forward techniques, like the Internet. Real-time communication, on the other hand, has been provided by circuit-switched, time-division multiplexed telephone networks.

Circuit-switched networks have many attractive properties. Circuits are isolated from each other in the sense that traffic on one circuit is unaffected by activities on the others. This makes it possible to provide guaranteed transfer quality with constant delay, which is suitable for applications with timing requirements. Furthermore, data and control are separated in circuit-switched networks. Processing of control information only takes place at establishment and tear-down of circuits, and the actual data transfer can be done without processing of the data stream, congestion control, etc. This allows large volumes of data to be transferred efficiently (See the article "The case for circuit-switching in future wide bandwidth networks", by P. O'Reilly, In Proc. of IEEE ICC, Philadelphia, Pennsylvania, June 1988, pp. 899-904). We think that this will be even more important in the future, since developments in photonics will dramatically reduce the cost of transmission, and switches will become the main communication bottlenecks.

The static nature of ordinary circuit-switched networks makes them inappropriate for certain types of traffic. Traditionally, circuits have fixed capacity, long set-up delay and poor support for multicast. These shortcomings make it difficult to efficiently support, for example, computer communication in a circuit-switched network. This has motivated a search for alternative solutions, and the predominant view is that the next generation of telecommunication networks should be cell-switched, based on ATM (Asynchronous Transfer Mode) (See e.g. "Integrated Broadband Networks", by R. Händel and M.N. Huber, Addison-Wesley, 1991). Cells are small, fixed-size packets, so this is an orientation towards packet-switching (See the article "New Directions in Communications (or Which Way to the Information Age?)", by J.S. Turner, IEEE Communications Magazine, Vol. 24, No.10, pp. 8-15, Oct. 1986). This means that many of the weaknesses of packet-switching are present also in cell-switched networks, in particular in the area of providing guaranteed quality of service. Therefore additional mechanisms, such as admission control, traffic regulation, scheduling of packets on links and resynchronization at the receiver are needed to integrate support for different kinds of traffic (See the article "Real-Time Communication in Packet-Switched Networks", by C.M. Aras et al., Proceedings of the IEEE, Vol. 82, No. 1, pp. 122-139. Jan. 1994). One of the main concerns with packet switched networks in general, and ATM in particular, is whether it is possible to realize these mechanisms in a cost-effective way (See e.g. the articles "Management and Control Functions in ATM Switching Systems", by T.M. Chen et al., IEEE Network Magazine, Vol. 8, No. 4, pp. 27-40, July/Aug. 1994; "Open issues regarding the universal application of ATM for multiplexing and switching in the B-ISDN", by M. Decina, In Proc. of IEEE ICC, Denver, Colorado, June 1991, pp. 1258-1264; "Conceptual Issues for ATM", by J. Grechter et al., IEEE Network Magazine, Vol. 3, No. 1, pp. 14-16, Jan. 1989; "ATM Network: goals and challenges", by B.G. Kim et al., Communications of the ACM, Vol. 38, No. 2, pp. 39-44, Feb. 1995; "The Latency/Bandwidth Tradeoff in Gigabit Networks", by L. Kleinrock, IEEE Communications Magazine, Vol. 30. No. 4, pp. 36-40, April 1992; "What Should Be the Goal for ATM?", by C-T. Lea, IEEE Network Magazine, Vol. 6, No. 5, pp. 60-66, Sept. 1992; and "ATM concepts, architectures, and protocols", by R.J. Vetter, Communications of the ACM, Vol. 38, No. 2, pp. 28-28, Sept. 1992)

DTM, Dynamic synchronous Transfer Mode, is a broadband network architecture developed at the Royal Institute of Technology in Sweden. It is an attempt to combine the advantages of circuit-switching and packet-switching, in that it is based on fast circuit-switching augmented with dynamic reallocation of resources, supports multicast channels, and has means for providing short access delay. The DTM architecture spans from medium access, including a synchronization scheme, up to routing and addressing of logical ports at the receiver. DTM is designed to support various types of traffic and can be used directly for application-to-application communication, or as a carrier network for other protocols, such as ATM or IP (Internet Protocol). A prototype implementation based on 622 Mbps optical fibers has been operational for two years, and work is in progress with a wavelength-division multiplexed version with four wavelengths. An overview of DTM with a more detailed description of the prototype implementation was previously published in the article "The DTM Gigabit Network", by C. Bohm et al., Journal of High Speed Networks, Vol. 3, No. 2, pp. 109-126, 1994.

Fast circuit-switching was proposed for use in telephone systems already in the early 1980's (See the article "TASI-E Communications System", by R.L. Easton et al., IEEE Transactions on Communications, Vol. 30, No. .4, pp. 803-807, April 1982). A fast circuit-switched telephone network attempts to allocate a transmission path of a given data rate to a set of network users only when they are actively transmitting information. This means that a circuit is established for every burst of information (See the articles "Voice/Data Integration Using Circuit Switched Networks", by E.A. Harrington, IEEE Transactions on Communications, Vol. 28, No. 6, pp. 781-793, June 1980; and "Communications Switching - From Operators to Photonics", by S.D. Personick et al., Proceedings of the IEEE, Vol. 75, No. 10, pp. 1380-1403, Oct. 1987). When silence is detected, the transmission capacity is quickly reallocated to other users. In the form used in TASI-E (Time Assignment Speech Interpolation), fast circuit-switching has been deployed for intercontinental communication between Europe and the United States. Burst switching is another form of fast circuit-switching, where a burst (consisting of a header, an arbitrary amount of data and a termination character) is sent in a time-division channel of fixed bit-rate and is thus interleaved with other bursts (See the article "Burst Switching - An Update", by S.R. Amstutz, IEEE Communications Magazine, Vol. 27, No. 9, pp. 50-57, Sept. 1989). This makes burst switching different from fast packet switching, where packets are sent one at a time with full link bandwidth. Furthermore, the length of a burst is not, in contrast to a packet, determined before the start of transmission.

It has been shown that the signaling delay associated with creation and tear-down of communication channels determines much of the efficiency of fast circuit-switching. DTM is therefore designed to create channels fast, within a few hundreds of microseconds. DTM differs from burst switching in that control and data are separated, and it uses multicast, multi-rate, high capacity channels to support a variety of different traffic classes. This means for example that it is possible to increase or decrease the allocated resources of an existing channel. Even though a DTM network may have the potential to create a channel for every message, we do not believe this approach is suitable for all traffic classes. Rather, it is up to the user to decide whether to establish a channel per information burst or to keep the channel established even during idle periods.

Resource management uses tokens to guarantee conflict free access to time-slots. The DTM model includes two different token management schemes. The first is an asymmetrical scheme based on a central token manager that manages all free tokens. The second is a symmetric scheme based on a distributed token manager where all nodes are sharing the token pool. Tokens in the distributed scheme are passed by a reallocation protocol. A token fragmentation problem is identified for the distributed scheme and a solution based on a defragmentation mechanism is presented. Both models support slot reuse and a scheme for fast connection establishment.

Traffic generators for the simulation are generating traffic with exponential inter-arrival distributions, bursty arrivals or asymmetrical client-server like traffic. Results show that the connection establishment overhead is low enough, that utilization may be high and that the reallocation protocol works well, even if a circuit is established for each individual packet. When the slot reuse scheme is turned on, utilization increases by almost a factor of two and other performance metrics improve as well. Finally, the results identify signaling capacity as the most significant limiting factor to achieve high performance if the average packet size is small.

New high-capacity communication networks and protocols are constantly being developed by the communications industry and academia. This development changes frequently and new results are important to application developers who integrate real-time audio, video, and asynchronous communication services into applications. The applications can be found'on a wide range of network access terminals. Terminals act as network hosts and may be almost any electronic device, including small pocket telephones or television sets, multi-media workstations, and million-dollar supercomputers. Hosts differ by orders of magnitude in their needs for processing power, and in their communication services requirements. These disparate needs are currently reflected in a set of independent network classes. Each network class is optimized for its particular traffic and applications: cable television networks use unidirectional broadcast networks where the capacity is divided into fixed-sized subchannels carrying video. A telephone network uses only 64 kbit/s duplex circuits with guaranteed throughput and tightly controlled delay variations. Computer networks, such as the Internet, allow a large number of parallel network sessions by use of connectionless packet switching. They also use statistical multiplexing to efficiently utilize links. A backbone network for mobile systems needs extra control (or signaling) capacity to dynamically track all active terminals.

With this wide spectrum of applications existing today and to be augmented in the future, it is infeasible to continually invent new, sometimes global, networks and a new terminal interface for each new type of service. Instead, an integrated services network supporting existing and new services needs to be deployed. The overall goals for such a network are scalability to global size and maximum sharing of expensive network components to minimize cost. Optical transmission technology has been shown to provide the necessary link capacity at a low enough price to make integrated services networks a realistic solution.

A new integrated optical network with much higher capacity will, however, introduce new problems not seen in today's more specialized and lower performance networks. First, when network capacity increases and the information flight latency remains limited by the speed of light, the increasing bandwidth delay product will put higher demands on mechanisms that isolate a user's traffic from third-party network traffic. A telephone session, for example, should not be affected by another user opening a high-capacity video channel. Second, applications and protocols will need to operate reliably with an increasing amount of information in transit to benefit from the increased network capacity. This will lead to larger burst and transaction sizes in the network.

Current networks using stateless packet switching protocols such as the Internet Protocol (IP) (See the documents "Internet Protocol Request for Comments (Standard) RFC 791", by J. Postel, Internet Engineering Task Force, September 1981, Obsoletes RFC 0760; and "The Internet activities board. Network Working Group Request for Comments RFC 1120", by Vinton G. Cerf, NRI, September 1989) have turned out to be extremely scalable. They have evolved from small networks connecting just a few Defense Advanced Research Projects Agency (DARPA) (See the document "Internetworking with TCP/IP, volume 1", by Douglas E. Comer, Prentice Hall, Englewood Cliffs, New Jersey, 1991) research computers in the mid seventies to the current global and ubiquitous Internet (See the article "The hitchhiker's guide to the Internet", by Ed Krol, Network Working Group Request for Comments RFC 1118, University of Illinois, September 1989). Shared medium local area networks (LAN's) (See the document "Data and Computer Communications", by W. Stallings, Macmillan Publishing Company, fourth edition, 1994) such as CSMA/CD, token ring and FDDI (Fiber Distributed Data Interface) are used in the Internet as simple building blocks connected by routers or bridges. The combination of easy expansion, low incremental node cost and tolerance to faulty nodes has resulted in simple, flexible, and robust networks. Also, the shared medium allows efficient application of new multicast protocols such as IP multicast (See the article "A study of slot reuse in dual bus multiple access networks", by M.W. Garrett et al., In Proceedings of the Conference on Computer Communications (IEEE Infocom), San Francisco, California, June 1990).

A drawback of the shared medium is that it typically permits only a single terminal to transmit at any time, thereby not utilizing all network segments efficiently. A scheme allowing the capacity of the medium to be reused may be designed (See the articles "Erasure node: Performance improvements for the IEEE 802.6 MAN", by M.A. Rodrigues, In Proceedings of the Conference on Computer Communications (IEEE Infocom), San Francisco, California, June 1990; and "Incorporating continuation-of-message information, slot reuse, and fairness in DQDB networks", by S. Banerjee et al., Computer Networks and ISDN Systems, 24:153-169, 1992), but this is often at the cost of complexity in the high-speed access control hardware. Access control mechanisms for a shared medium also depend strongly on the size of the network and are usually efficient only for local area environments.

The two main types of network are connection oriented circuit-switched networks used for telephony, and connectionless packet-switched networks exemplified by the Internet. When a circuit-switched network is used for data communication, circuits need to remain open between bursts of information, wasting network capacity. This problem arises because circuit management operations are slow compared to dynamic variations in user demand. Another source of overhead in circuit-switched networks is the limitation of requiring symmetrical duplex channels, which introduce 100% overhead when information flow is unidirectional. This constraint also makes multicast circuits inefficient and difficult to implement. A connectionless packet-switched network, on the other hand, lacks resource reservation and must add header information to each message before transmission. Furthermore, latency in a connectionless packet-switched network cannot be accurately predicted and packets may even be lost due to buffer overflow or corrupted headers. The latter two factors make real-time service difficult to support. Congestion avoidance mechanisms can isolate traffic streams of different users. These schemes are, however, limited to operating on a time scale comparable to the round-trip packet delay.

To address the problems mentioned above, the communications industry is focusing on the development of Asynchronous Transfer Mode (ATM) (See the document "ATM Networks - concepts, protocols, applications", by R. Handel et al., ADDISIN-WESLEY, second edition, 1994). ATM has been proposed for LAN's and many future public networks. International Telegraph and Telephone Consultative Committee (CCITT) also adopted it to be used as the transfer standard in broadband ISDN (B-ISDN) (See the document "ISDN and broadband ISDN", by W. Stallings, Macmillan, TK 5103.7.S73 1992). ATM networks are connection-oriented and establish a channel just as circuit-switched networks, but use small fixed-sized packets called cells for information transfer. The packet-switched nature of ATM means that the network needs to have new mechanisms such as buffer resource managers and link schedulers to establish real-time guarantees for a connection.

Our solution for providing real-time guarantees centers on a circuit-switched network and we must therefore address circuit-switching concerns such as those described above. We also employ a new shared-medium control protocol, and so must consider common shared-medium problems. Our design, called Dynamic synchronous Transfer Mode (DTM) (See the articles "Multi-gigabit networking based on DTM", by L. Gauffin et al., Computer Network and ISDN Systems, 24(2): 119-130, April 1992; "The DTM Gigabit Network", by C. Bohm et al., Journal of High Speed Networks, 3(2):109-126, 1994; and "Fast circuit switching for the next generation of high performance networks", by C. Bohm et al., IEEE Journal on Selected Areas in Communications, 14(2), February 1996), uses channels as the communication abstraction. Our channels differ from telephony circuits in various ways. First, establishment delay is short so that resources can be allocated/deallocated dynamically as fast as user requirements change. Second, they are simplex and so minimize overhead when the communication is unidirectional. Third, they offer multiple bit-rates to support large variations in user capacity requirements. Finally, they are multicast, allowing any number of destinations.

DTM channels share many beneficial properties with circuits. There is no transfer of control information after channel establishment, resulting in very high utilization of network resources for large data transfers. Support of real-time traffic is natural; there is no need for policing, congestion control or flow-control within the network. The control information is separated from data, which makes multicast less complex. The transmission delay is negligible (i.e. less than 125 µs) and there is no potential for data loss caused by buffer overflow as in ATM. Bit-error rates depend on the underlying link technologies, and switches are simple and fast due to strict reservation of resources at channel set-up. The aim of this paper is to study the performance of DTM in the areas where traditional circuit-switched networks fall short: dynamic bandwidth allocation, channel establishment delay, and as shared media networks. Principles for resource management (called token management) are presented and evaluated. We report results from simulations where we expose DTM to traffic patterns that are more like the relatively short-lived transfers (4-4000 kbyte) seen in computer communication. Traffics are with bursty inter-arrivals, client-server oriented as well as with exponentially distributed inter-arrival times.

The article "Multi-gigabit networking based on DTM, A DTM medium access technique with dynamic bandwidth-allocation", by L. Gauffin et al., Computer Network and ISDN Systems, Vol. 24, No. 2, April 1992, pp. 119-130, discloses a distributed management protocol according to which the time slots are distributed evenly among the nodes. This implies a completely symmetrical system.

The document WO 89/08363 describes the concept of DTM and defines the meaning of static and dynamic time slots. The document also describes a telecommmunication system which is used in a network comprised of connected buses. The document describes that dynamic time slots can be redistributed between the nodes on a bus, but does not describe how this shall be accomplished.

The document EP 0 451 426, A1, describes a packet switching system which uses CRMA (Cyclic Reservation Multiple Access), which means that a node is sending a message to a server which is situated in the end of the bus, for each cycle in which the node wants to send data. CRMA is not intended for a synchronous network.

### Summary of the Invention

It is an object of the invention to provide a method for centralized management of the capacity in a circuit-switched network with a bus or ring structure. The network uses a bandwidth which is partitioned in cycles, which in turn are partitioned in control time slots for signaling and data time slots for transfer of data, and wherein each data time slot is associated with a token. The method comprises the following steps:
- that a first node, called server node, is being allocated tokens corresponding to all data time slots which are flowing in one direction in a bus or a ring,
- that a second node is requesting tokens corresponding to a certain capacity from the server node.
- that the server node makes reservations for and transfers tokens corresponding to requested capacity to the other node in the event the server node has requested capacity unutilized, and
- that transferred tokens are retransmitted to the server node and released when corresponding data time slots have not been used for transferring of data of the other node during a significant time. The main advantage with this method is that the utilization increases and other performance metrics improve as well.

Advantageously, the method is implemented in a network of DTM-type (Dynamic Synchronous Transfer Mode).

Preferably, the method comprises the step:
- that transferred tokens are retransmitted to the server node and released when corresponding data time slots no longer are used for transferring of data.

Advantageously, the method comprises the step:
- that the server node is chosen as the node which has 1/3 of the nodes situated upstream and 2/3 of the nodes situated downstream.

Another object of the invention is to provide a method for distributed management of the capacity in a circuit-switched network with a bus or ring structure. The network uses a bandwidth which is partitioned in cycles, which in turn are partitioned in control time slots for signaling and data time slots for transfer of data, and wherein each data time slot is associated with a token (write access). The method comprises the following steps:
- that at least two nodes, called server nodes, are defined among which are distributed tokens corresponding to all data time slots which are flowing in one direction in a bus or a ring,
- that a node is requesting tokens corresponding to a certain capacity from at least one of the server nodes,
- that this server node makes reservations for and transfers tokens corresponding to requested capacity to the requesting node in the event the server node has requested capacity unutilized, and
- that transferred tokens are retransmitted to the respective server node, and are released when corresponding data time slots have not been used for data transferring during a significant time.

Advantageously, the method is implemented in a network of DTM-type (Dynamic Synchronous Transfer Mode).

Preferably, the method also comprises the step:
- that several server nodes are asked, make reservations for and transfer tokens, which together corresponds to the completely requested capacity, to the requesting node in the event that the server nodes together have the requested capacity unutilized.

Advantageously, the method also comprises the step:
- that received tokens are used for establishing of channels by sending of a channel establishing message to the node or the nodes which are designated receiver of data in the event that a node has received tokens corresponding to the requested capacity.

Preferably, the method also comprises the step:
- that one or several server nodes makes reservations for an transfers tokens corresponding to all of the unutilized capacity to the requesting node in the event that the server nodes together do not have the requested capacity unutilized.

Advantageously, the method also comprises the step:
- that one or several nodes are not transferring any token to the requesting node in event that the server nodes together do not have the requested capacity unutilized.

Preferably, the method also comprises the step:
- that tokens are requested by a node in the event that possibly received tokens do not correspond to the requested capacity.

Advantageously, the method also comprises the step:
- that tokens received in a node are released in the event that these tokens do not correspond to the requested capacity.

Preferably, the method also comprises the step:
- that received tokens are used for establishing of channels by sending of a channel establishing message to the node or the nodes which are designated receivers of data in the event that a node has not received tokens corresponding to the requested capacity.

Advantageously, the method also comprises the step:
- that each server node regularly is sending information regarding its idle capacity to the rest of the nodes and each node stores in a status table information received from the other nodes.

Preferably, the method also comprises the step:
- that a node is requesting tokens from the server node which for the moment has the most unutilized capacity.

Advantageously, the method also comprises the step:
- that a node is requesting tokens from the server node which is closest and for the moment has the requested capacity unutilized.

Preferably, the method also comprises the step:
- that the server node from which capacity is requested will be found by referring to the status table.

Advantageously, the method also comprises the step:
- that all nodes in a bus or a ring are defined as server nodes and are allocated at least one token.

Preferably, the method also comprises the step:
- that all nodes in a bus or a ring are allocated the same number of tokens.

Advantageously, the method also comprises the step:
- that transferred tokens are retransmitted to the respective server node, and are released when corresponding data time slots no longer are used for data transfer.

Preferably, the method also comprises the step:
- that transferred tokens are released when corresponding data time slots'no longer are used for data transfer.

Advantageously, the method also comprises the step:
- that consecutive tokens in a node are represented by a token, called block token, which is indicated as a number on the first time slot in a row and the total umber of time slots in the row.

Preferably, the method also comprises the step:
- that a token is partitioned into at least two tokens corresponding to the same time slot, but to different segments, where a segment refers to a part of a transmission medium which is connecting at least two nodes.

Advantageously, the method also comprises the step:
- that the server node, in the event that it has several time slot- or segment-consecutive groups of tokens to choose among, is making reservations for and transferring the tokens which originate from the smallest group of time slot or segment-consecutive tokens which satisfies a request of capacity, and wherein the smallest group is defined as the group which product of time slots and segments with predetermined weights is the lowest.

Preferably, the method also comprises the step:
- that groups of tokens, which are at least partly segment-consecutive, are regrouped to maximize the number of consecutive segments for each group of tokens at the expense of the number of consecutive time slots.

Another object of the invention is to provide a node control unit in a circuit-switched network with a bus or ring structure. The network uses a bandwidth which is partitioned in cycles, which in turn are partitioned in control time slots for signaling and data time slots for transfer of data, and wherein each data time slot is associated with a token. The node control unit is allocated tokens corresponding to a predetermined number of data time slots which are flowing in one direction in a bus or a ring. The node control unit is arranged to make reservations for and to transfer tokens to a second node control unit in a second node in the event that it receives a request for tokens from the second node control unit and that it has requested capacity unutilized. The second node control unit is arranged to retransmit the transferred tokens to the node control unit and to release them when corresponding data time slots have not been used for transferring of data of the second node control unit during a significant time.

Advantageously, the network is of DTM-type (Dynamic Synchronous Transfer Mode).

Another object of the invention is to provide a node, also called server node, in a circuit-switched network with a bus or ring structure. The network uses a bandwidth which is partitioned in cycles, which in turn are partitioned in control time slots for signaling and data time slots for transfer of data, and wherein each data time slot is associated with a token. The node is characterized by a node control unit, which is allocated tokens corresponding to a predetermined number of data time slots which are flowing in one direction in a bus or a ring, and is arranged to make reservations for and to transfer tokens to a second node control unit in a second node in the event that it receives a request for tokens from the second node control unit and that it has requested capacity unutilized.

Advantageously, the network is of DTM-type (Dynamic Synchronous Transfer Mode).

Preferably, the node is allocated tokens corresponding to all of the data time slots which are flowing in one direction in a bus or a ring.

Advantageously, the node has 1/3 of the nodes of the bus or the ring upstream and 2/3 of the nodes of the bus or the ring downstream.

Another object of the invention is to provide a circuit-switched network of a bus or ring structure, which network uses a bandwidth which is partitioned in cycles, which in turn are partitioned in control time slots for signaling and data time slots for transfer of data, and wherein each data time slot is associated with a token. The network is characterized by a node, also called server node, being allocated tokens corresponding to a predetermined number of data time slots which are flowing in one direction in a bus or ring, and is arranged to make reservations for and to transfer tokens to a second node in the event that it receives a request for tokens from the second node and that it has requested capacity unutilized.

Another object of the invention is to provide a circuit-switched network of a bus or ring structure. The network is characterized in that at least two nodes, called server nodes, are defined among which tokens corresponding to all data time slots which are flowing in one direction in a bus or a ring are distributed and in that the server nodes are arranged to make reservations for and transfer tokens to a third node in the event that the server nodes receive a request for tokens from the third node and that they have the requested capacity unutilized.

Advantageously, the network is a network of DTM-type (Dynamic Synchronous Transfer Mode).

Preferably, a node is arranged to use received tokens for establishing of channels by sending a channel establishing message to the node or the nodes which is intended to be receiver of data in the event that the node has received tokens corresponding to the requested capacity.

Advantageously, one or several server nodes are arranged to make reservations for and to transfer tokens corresponding to all unutilized capacity to the requesting node in the event that the server nodes together do not have the requested capacity unutilized.

Preferably, one or several server nodes are arranged to not transfer any token to the requesting node in the event that the server nodes together have not the requested capacity unutilized.

Advantageously, a node is arranged to use a status table, a regularly updated list of the unutilized capacity of all the server nodes, for decision upon which server node to request tokens from.

Embodiments of the invention will now be described with a reference to the accompanying drawings, in which

### Brief description of the drawings

- Fig. 1: DTM multiplex format.
- Fig. 2: DTM nodes connected in a network structure.
- Fig. 3: A multi address group.
- Fig. 4: Throughput and access delay for different packet sizes.
- Fig. 5: Throughput and delay for strict capacity request with re-request (16 kbyte transfers).
- Fig. 6: Throughput and access delay for different user demands (16 kbyte transfers).
- Fig. 7: Network throughput and access delay as a function of bus length (16 kbyte transfers).
- Fig. 8: Throughput and access delay in a 20x20 grid.
- Fig. 9: A DTM network of dual bus structure.
- Fig. 10: DTM 125 µs cycle.
- Fig. 11: A token map showing time slot number and segment.
- Fig. 12: A time slot-segment map showing reuse of time slots.
- Fig. 13: A distributed token server.
- Fig. 14: User re-request for increasing of the degree of utilization (16 kB).
- Fig. 15: Defragmentation: access-delay as a function of simulated time.
- Fig. 16: Theoretical dual bus and DTM throughput.
- Fig. 17: A centralized token server.
- Fig. 18: A centralized token server and time slot reuse.
- Fig. 19: A 1000 km bus with a centralized token server.
- Fig. 20: Utilization and access-delay: distributed token server.
- Fig. 21: 1-1000 km buys with distributed token server.
- Fig. 22: Distributed token server.
- Fig. 23-28: Time slot-segment maps.

### Detailed Description of Embodiments

### 2. DTM-Dynamic Synchronous Transfer Mode

DTM is designed for a unidirectional medium with multiple access, i.e., a medium with capacity shared by all connected nodes. It can be built on several different topologies, such as ring, folded bus or dual bus. We chose the dual bus, since it has shorter average inter-node distance than a folded bus, and DTM's synchronization scheme was found to be easier to implement on a dual bus than on a ring.

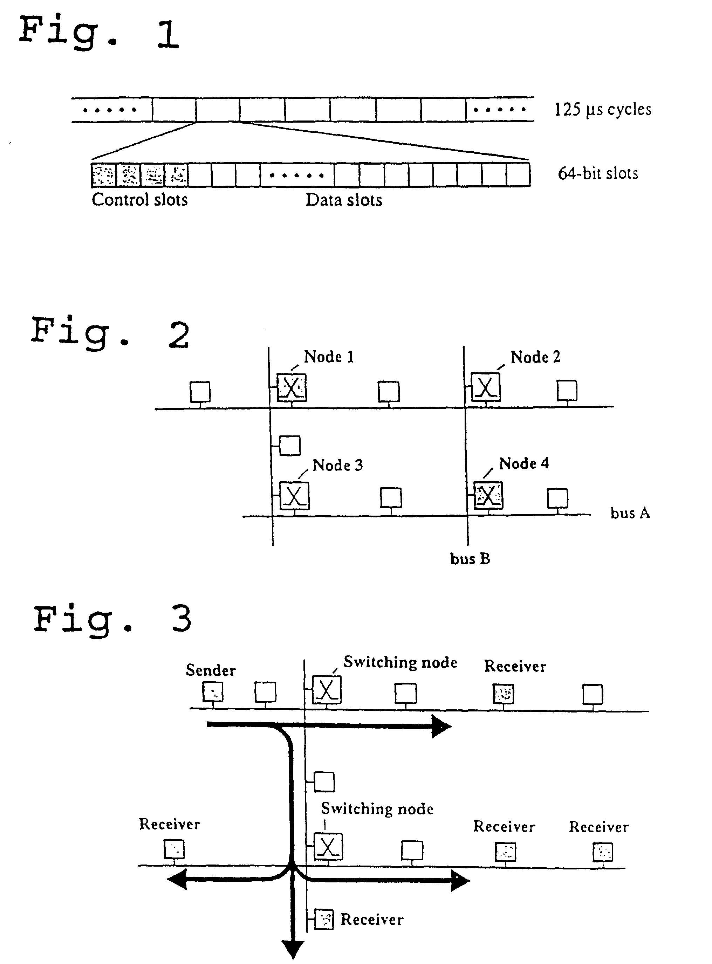

The service provided is based on channels. A channel is a set of time slots with a sender and an arbitrary number of receivers; it is guaranteed that the data will reach the receivers at the rate given by the capacity of the channel. The channels on the physically shared medium are realized by a time division multiplexing (TDM) scheme (Figure 1). The total capacity is divided into cycles of 125 microseconds which are further divided into 64-bit slots.

The slots are separated into data and control slots. Each node has access to at least one control slot, which is used for sending control information to the other nodes. Control messages can be sent upon request from a user, in response to control messages from other nodes or spontaneously for management purposes. The control slots constitute a small fraction of the total capacity, while the major part of the slots are data slots carrying payload. At system start-up, the data slots are allocated to the nodes according to some predefined distribution. This means that each node "owns" a portion of data slots. A node needs ownership of a slot to send data in it, and the ownership of slots may change dynamically among the nodes during the operation of the network.

### 2.1 Slot Allocation

DTM uses a distributed algorithm for slot reallocation, where the pool of free slots is distributed among the nodes. There were two main reasons for using a distributed scheme instead of a central pool of slots. First, when a node can establish a channel using only slots from the local pool, there is very little overhead in the channel establishment. Second, a distributed algorithm does not rely on a single node, so it has some tolerance to node failures. The main drawback of a distributed implementation is the overhead of communication and synchronization between nodes.

At the reception of a user request, the node first checks its local pool to see if it has slots enough to satisfy the request and, if so, immediately sends a channel establishment message to the next hop. Otherwise the node first has to request more slots from the other nodes on the bus. Each node maintains a status table that contains information about free slots in other nodes, and when more slots are needed the node consults its status table to decide which node to ask for slots. Every node regularly sends out status messages with information about its local pool of slots. Status messages have lower priority than other control messages so they are only sent when the control slot otherwise would be unused. Furthermore, the reallocation algorithm does not depend on nodes to process all status messages, so a node can safely ignore status messages while it is busy.

The procedure for slot reallocation is simple and works as follows: if a user requests a channel with M slots and the node has N free slots, where , it sends requests asking for slots. The node starts by sending a request to the closest node with free slots. If this node does not have sufficiently many free slots, according to the status table, a request is sent also to the second closest node with free slots, and so on. The node waits until a response for each of the requests has been received and then grants or rejects the channel request, depending on the outcome of the reallocation procedure.

A node that has some amount J of free slots and receives a slot reallocation request for K slots will always give away min(J, K) slots. The node responds by sending a slot reallocation confirmation, which indicates what slots the node gives away. If the requested node does not have any free slots, it responds with a slot reallocation reject instead. In addition to this algorithm, resources may be controlled by a network management system. For example, to prevent the network from starvation, a node can be configured not to give away all its slots, but to keep a certain fraction of its initial share.

### 2.2 Switching

A DTM network can be expanded by interconnecting several buses with switch nodes (see Figure 2). DTM uses decentralized switching in the sense that any node connected to two or more buses can switch data between them. One advantage with this is that the switching capacity can be increased gradually by adding more switch nodes. The switching is synchronous, which means that the switching delay is constant for a channel. This means that a multi-hop channel has roughly the same properties as a channel on a single bus. The only difference is that a switched channel has slightly longer delay (up to 125 microseconds for each hop). Provided that a switch node can buffer one cycle of data for each of its buses, there cannot be any congestion or overflow in the node.

The synchronization between buses is done on a per cycle basis-cycles are started with the same frequency on all buses. This is accomplished by letting one network node be responsible for generating the cycles periodically on all its outgoing buses. For each new cycle, this node generates a cycle-start marker that is forwarded to all buses in the network. For each bus there is one switch node that is responsible for forwarding the marker onto the bus. Those switch nodes need to be organized in such a way that the marker reaches every bus exactly once. When the marker reaches a bus, the cycle is restarted on this bus.

The cycle time and the slot size are both constant for all buses, which means that the synchronization scheme allows different buses to run at different bit rates. This makes it possible to upgrade or reconfigure individual buses in a network without affecting the rest of the network.

### 2.3 DTM channels

The channel abstraction in DTM differs from ordinary circuits, in that channels have the following properties.
. Simplex: a channel is set up from sender to receivers. A duplex connection consists of two channels, one in each direction.
. Multirate: channels may consist of an arbitrary number of data slots, which means that channel capacity can be any multiple of 512 Kbps, up to the entire data capacity of the bus.
. Multicast: a channel can have several receivers.

A node creates a channel by allocating a set of data slots for the channel and by sending a channel establishment control message. The control message is addressed either to a single node or to a multicast group, and announces that the channel has been created and what slots it uses.

To create a channel, slots must be allocated at the sender and at each switch node along the channel's route. Thus, switch nodes allocate slots for a channel on behalf of the sender. The switch nodes then start switching the channel, by copying the channel's slots from the incoming to the outgoing bus. An attempt to establish a multi-hop channel fails if any of the switch nodes involved cannot allocate the required amount of slots. In this case another route has to be tried. In a grid structure, there are normally several routes between each pair of nodes. The current version of the protocol uses source routing together with an addressing scheme based on (x, y) coordinates in the grid. A simple load-balancing scheme for two hops is achieved by letting each switch node use status messages to send information about the amount of free slots on its outgoing buses. For example, there are two possible routes between node 1 and node 4 in Figure 2, so if node 1 wants to set up a connection to node 4 it can choose between using switch node 2 and switch node 3. Node 1 receives status information from node 2 and 3, and can make its routing decision based on this information. This algorithm works well for dense grid networks, where most routes use only two hops, but a general routing algorithm is required for more arbitrary topologies.

### 2.3.1 Multicast channels

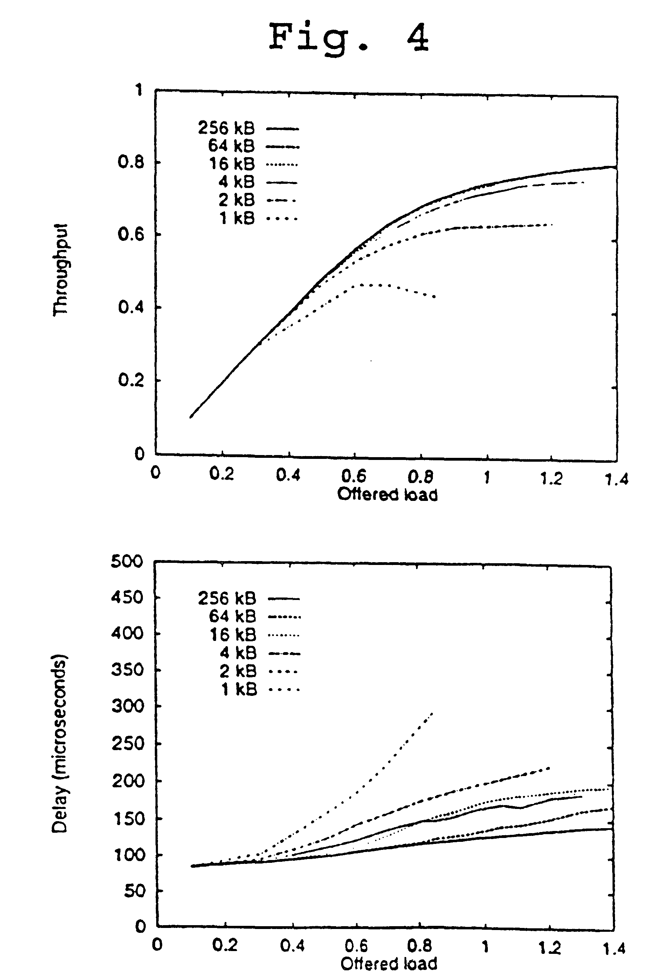

A traditional circuit is a point-to-point connection between a sender and a receiver. DTM uses a shared medium which inherently supports multicast since a slot can be read by several nodes on a bus. A multicast channel can easily be extended to span over several hops, since the switch operation is actually a multicast operation, in the sense that it duplicates data onto another bus (see Figure 3).

### 3 Network Performance

In this section we investigate throughput and delay under varying traffic conditions. We have performed simulations for two different network topologies:
. A dual bus with 100 nodes.
. A fully connected grid of dual buses with 20 ¥ 20 nodes.

In the simulation model, nodes receive transfer requests from a traffic generator and control messages from other network nodes. These events are put in an input queue at the node, and the node processes one event at a time. The time to process one event is 5 microseconds. Transfer requests are generated by Poisson processes, and source and destination addresses are uniformly distributed. For each transfer request, a node attempts to allocate slots and, if that succeeds, establishes the channel, transfers the data and takes down the channel. This means that slots are released as soon as the transfer is done.

The simulations are performed for different transfer sizes (1 to 256 kilobytes), for different kinds of user requirements, and for different inter-node distances (0.01 to 10 kilometers). The link bit-rate is 4.8 Gbps, which gives a slot rate of 75 MHz and a cycle size of 9600 slots. Each transfer requests 40 slots per cycle. This corresponds to 20.48 Mbps channels, which means that a 16 kilobyte transfer, for example, takes about 6 milliseconds.

We calculate the throughput by dividing the total amount of transferred user data by the simulated time, and normalize this value to the capacity of one dual bus (9.6 Gbps). The maximum throughput that is possible to achieve is always less than the link capacity, since some capacity is used for control messages. In the single dual bus simulations, with 100 nodes, the control capacity is 5 control slots per node, which corresponds to 5% overhead. The maximum possible throughput is then 0.95.

The grid has more nodes than the single dual bus, but fewer nodes per bus (20 instead of 100). Since the traffic load on a bus is distributed over its nodes, this means that at a given bus load, the grid will have more traffic to and from each node. A node in the grid therefore needs more control slots. However, a node has limited capacity to process control messages, and we have found that with 5 microseconds event processing time, very little performance is gained by using more than 10 control slots per node. We therefore use 10 control slots per node in the grid, which gives a maximum possible throughput of 0.98.

Access delay is the average time from the time that a request arrives to the node until the data transfer starts. It is a measure of the overhead at channel establishment and includes the time it takes to allocate slots, send a channel establishment message to the receiver, and send the first slot of data. In the multi-hop case, the sender waits for a confirmation from the receiver that the channel has been established on both buses before it starts sending data. For the single hop case, the sender alone creates the channel to the receiver, and can therefore start sending data as soon as the slots have been allocated.

### 3.1 One Dual Bus

The first set of simulations concerns performance of one dual bus. The purpose of these simulations is mainly to study slot allocation schemes for different user requirements. Since slot allocations on different buses are independent operations, these results are generally applicable for the multi-hop cases as well.

### 3.1.1 Strict Capacity Demand Without Retry

Figure 4 shows the results of a basic simulation where a node makes at most one attempt to allocate the requested capacity for a channel, and rejects the request if the full requested capacity cannot be allocated. Transfer sizes between 1 and 256 kilobytes are simulated. The simulations could not be carried out for the smallest transfers (1 and 2 kilobyte in Figure 4) at high load, due to the simulator event queue growing too large, indicating that the control capacity is exhausted.

At low load, most transfer requests are accepted immediately and the throughput therefore increases linearly with the load. At higher load, slot reallocation becomes frequent, some transfer requests are rejected, and the throughput increases only marginally with the load. If the load gets even higher, the signaling capacity is exhausted, and throughput does not increase (or goes down, as in the case for 1 kilobyte transfers in Figure 4). Smaller transfers require more frequent control signaling than large transfers at a given load, and therefore throughput is lower for smaller transfers than for larger (at most 0.47 is achieved for 1 kilobyte transfers, which is 50% of the maximum possible throughput, compared to 85% for 256 kilobyte transfers). Throughput is also limited by the strict user behavior, requiring the entire requested capacity to be allocated in a single attempt. The simulations reported below show that throughput can be increased by relaxing this requirement.

The access delay consists, at low load, mainly of the time it takes for a node to process the transfer request, wait for the first available control slot (for the channel establishment message), and then for the first data slot (80 microseconds together, on the average). When the load increases, nodes have to request slots from other nodes and more delay is introduced.

### 3.1.2 Strict Capacity Demand with Retry

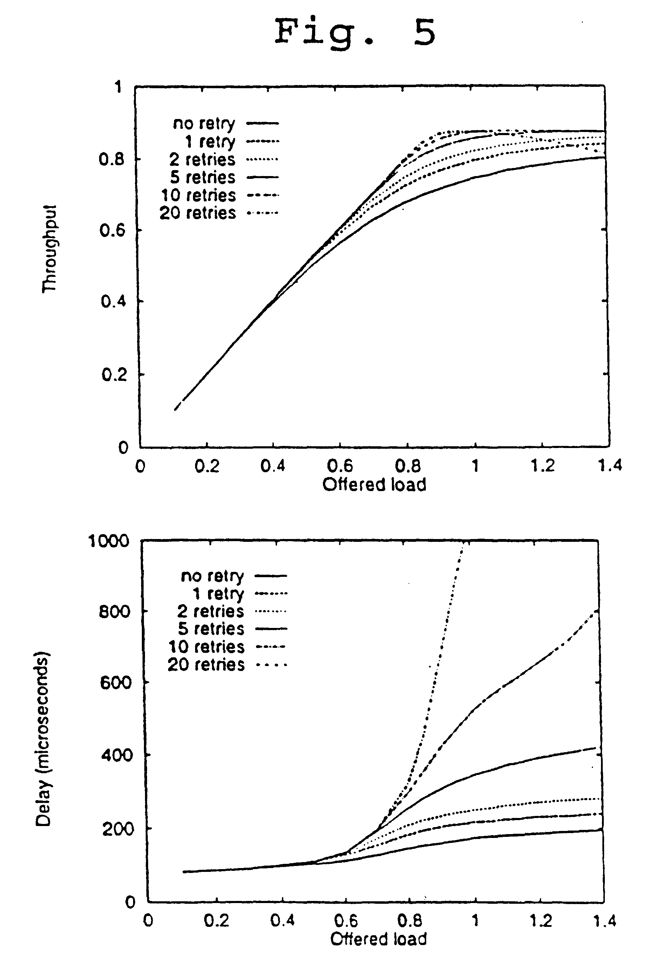

It is possible to increase throughput by letting a node retry, that is, make more than one attempt to allocate slots for a channel. Figure 5 shows throughput and access delay for different values of the maximum number of retries allowed. When nodes are allowed to retry, more channels can be established and throughput increases (up to 92% of the maximum possible throughput), but at the expense of longer access delay and more signaling. Thus, retry is best suited for applications that have strict bandwidth demand but can tolerate some access delay. However, if a large number of requests are persistently retried (as in an overload situation), performance will degrade. Figure 5 shows that performance decreases when the load is high and nodes are allowed to retry 20 times, which indicates that the signaling capacity is not sufficient for 20 retries.

### 3.1.3 Flexible Capacity Demand

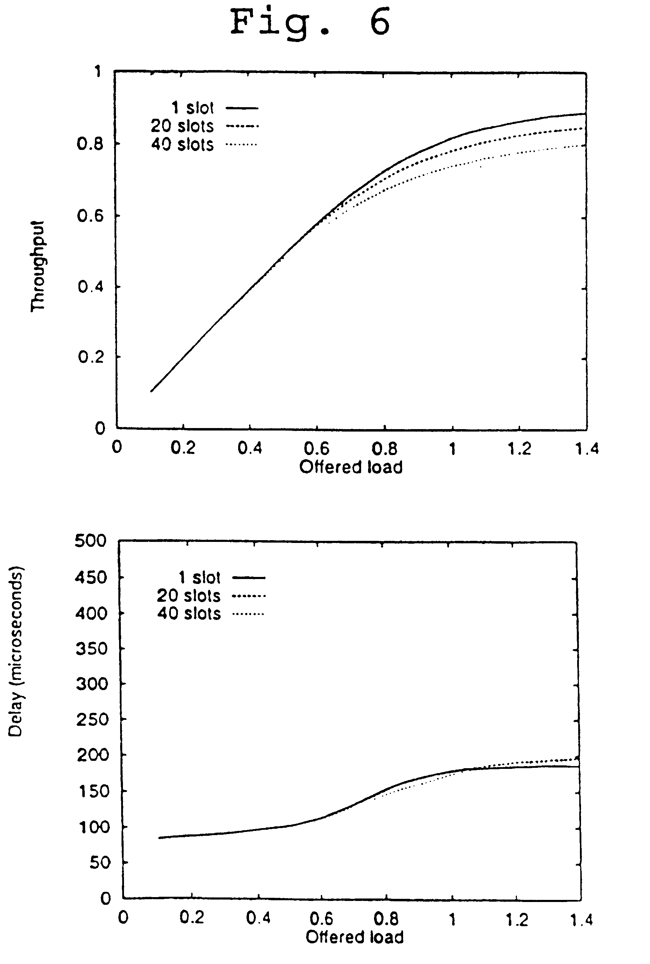

An application with less stringent demands on capacity may be prepared to accept channels with less capacity than requested. This allows more channels to be established with a single slot reallocation attempt. Figure 6 shows throughput and delay for three cases: when the user is satisfied with any capacity (minimum 1 slot), requires at least half the requested capacity (20 slots), and needs the full capacity (40 slots). Throughput goes up when the user is less demanding. When the user requires only one slot, the throughput achieved is 94% of the maximum possible throughput. The slot reallocation procedure is however the same in all three cases, which explains why access delay is practically the same in the three cases.

### 3.1.4 Performance as a Function of Distance

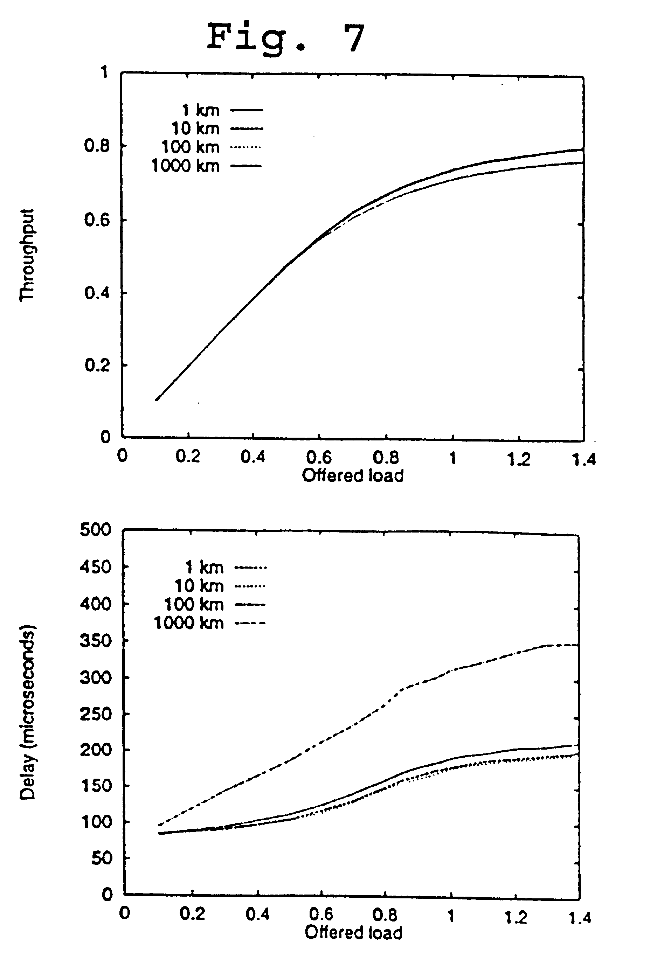

When the distance between nodes is increased, it takes longer time to exchange control messages for slot reallocation. This can be seen in Figure 7, which shows throughput and access delay for different bus lengths (with strict capacity demand without retry, i.e., the same slot allocation principle as in Figure 4). The access delay increases significantly when the bus gets longer. However, this affects mainly the creation of channels, and throughput is therefore relatively independent of distance. Another effect of increased bus length is that it takes longer time to propagate status information, which may increase the probability of slot reallocation failure. This would mainly influence throughput, but the simulation results indicate that this has only a minor effect.

### 3.2 Grid Network

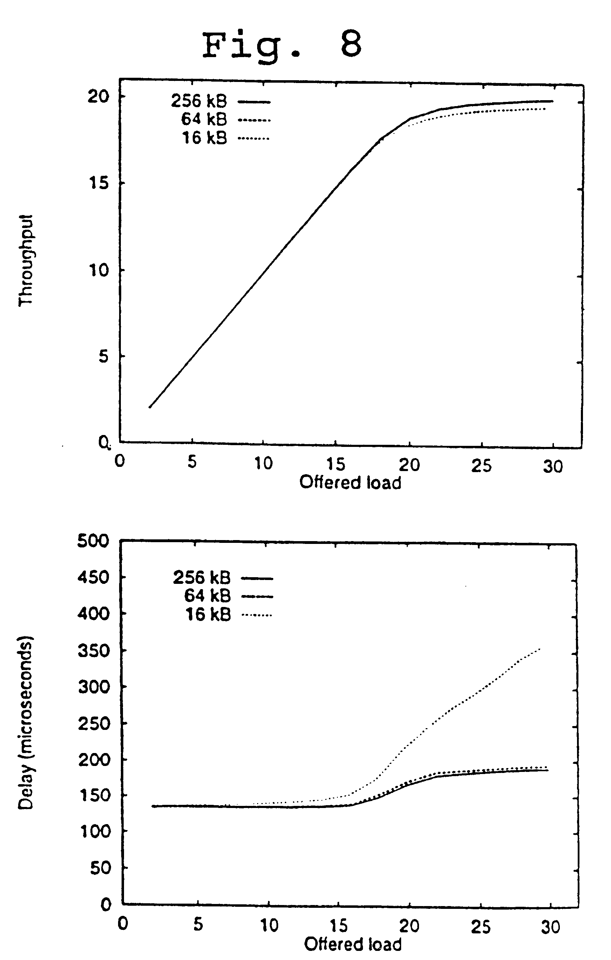

Figure 8 shows the result of a simulation for multi-hop channels. The network is a fully connected grid network with 20 x 20 nodes. Channels use at most two hops, and the routing decision is based on the information from status messages. The slot allocation principle is the same as in Figure 4, that is, strict demand without retry.

With uniform distribution of source-destination pairs, the theoretical maximum throughput of a fully connected grid is, where n is the number of buses. With 2.1% signaling overhead, the 20 x 20 grid has a maximum possible throughput of approximately 20.6. Figure 8 shows that for 256 kilobyte transfers, the maximum throughput is 97.5% of the possible maximum, compared to 95.1% for 16 kilobyte transfers. This is significantly more than in the case of one dual bus (Figure 4), and our explanation for this is that there are less nodes per bus in the grid, which means that the pool of free slots is less scattered, and therefore there is a higher probability that slot reallocation succeeds.

The access delay for a multi-hop channel will be longer than on a single hop, since slots have to be allocated on two buses. For 256 kilobyte transfers, the access delay is roughly 50 per cent longer in the multi-hop case compared to the single hop case. One could expect the access delay in the grid to be longer than this. There are two main reasons why this is not the case. First, there is a certain amount of parallelism in channel establishment over two hops. Second, the interval between control slots is shorter in the grid, so a node spends less time waiting for control slots. For 16 kilobyte transfers, however, the delay increases dramatically for higher load, which indicates that signaling capacity is insufficient.

### 4 Conclusion and Future Work

The Dynamic synchronous Transfer Mode (DTM) is a network architecture for integrated services. It is based on fast circuit switching, and provides multi-rate, multicast channels with short set-up time. A channel gives guaranteed capacity and constant delay, which makes it well suited for real-time traffic, such as video and audio. In contrast to traditional circuit-switched networks, DTM also provides dynamic reallocation of resources between nodes in order to support dynamically varying traffic.

We have reported performance analysis through computer simulations for various configurations. The analysis focuses on packet-like traffic patterns, since this type of traffic is considered to be the most challenging for a network based on circuit switching. The intention is to study how network utilization and access delay are affected when channels are frequently established and released. We use 20 Mbps channels, where a channel is established for each transfer, and the transfer size varies between 1 and 256 kilobytes. The analysis was performed for two kinds of topologies: a dual bus and a grid of dual buses. The protocol requires that a certain fraction of the total capacity is reserved for control information: we used about five per cent for the dual bus, and two per cent for the grid.

The results show that when the traffic consists of short, frequent transfers (of a few kilobytes), performance is determined by the amount of signaling capacity available. For the dual bus, good results are achieved even when the network is loaded with transfers that are only few kilobytes long, whereas the grid was saturated for 16 kilobyte transfers. To summarize, the application shows that fast circuit switching, as applied in DTM, performs well even for packet traffic using short-lived connections. This, in combination with its inherent support for real-time traffic, makes fast circuit-switching an appealing alternative for B-ISDN and beyond.

For future work, the performance results suggest that in order to send packets on DTM, one needs to find a scheme for multiplexing packets onto channels that groups packets together into slightly larger units. Assuming that computers generate traffic that conforms to the train model bursts of packets where many of the packets within a burst have the same destination-a simple scheme similar to those used in the early fast circuit-switched networks seems appropriate. In such a scheme, the channel is closed and its resources are released when the sender has been idle for more than a certain period. This is, however, an area that needs further investigation. The performance results are encouraging and we will explore further the effects of non-uniform traffic models, such as bursty sources and asymmetric sender-receiver distributions.

### 5. The DTM medium access control protocol - DTM-MAC

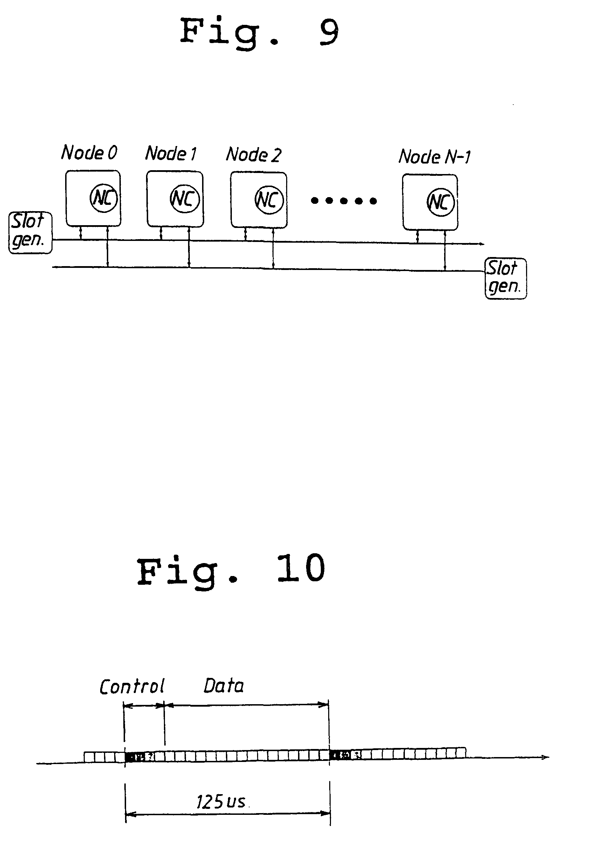

The basic topology of a DTM network (see Fig.9) is a bus with two unidirectional optical fibers connecting all nodes. Several busses with different speeds may be connected together to form an arbitrary multistage network. In the current prototype implementation, buses can be combined into a two-dimensional mesh. A node at the junction of two buses can synchronously switch data slots between the two busses. This allows for efficient switching with constant delay through the node. The primary communication abstraction in DTM is a unidirectional, multi-rate and multicast channel.

The DTM medium access protocol is a time-division multiplexing scheme. The bandwidth of the bus is divided into 125 us cycles (Fig. [10]), which in turn are divided into 64-bit time slots (or slots for short). The number of slots in a cycle thus depends on the network's bit-rate; for instance, on a 6.4 Gbit/s network there are approximately 12500 slots per cycle.

The slots are divided into two groups, control slots and data slots. Control slots are used to carry messages for the network's internal operation, such as messages for channel establishment and bandwidth reallocation. The data slots are used to transfer user data and are not interpreted by intermediate network nodes. Intermediate nodes are nodes between the source and destination.

In each network node there is a node controller, which controls the access to data slots and performs network management operations, such as network start-up and error recovery. The main tasks of the node controller are to create and terminate channels on demand from users, and to manage network resources in response to user requests and in the background.

Control slots are used exclusively for messages between node controllers. Each node controller has write permission to at least one control slot in each cycle, which it uses to broadcast control messages to downstreams nodes. Since write access to control slots is exclusive, the node controller always has access to its control slots, regardless of other nodes and network load. The number of control slots a node uses may vary during network operation.

### 6. Token management

The majority of the slots in a cycle are data slots. Access to data slots changes over time, according to traffic demands. Write access to slots is controlled by slot tokens (or tokens for short). A node controller may write data into a slot only if it owns the corresponding token. The token protocol guarantees the slot access to be conflict free, which means that at most one node writes data into the same slot.

Control messages for channel establishment and bandwidth reallocation carry sets of tokens as parameters. However, a control message is 64 bits and can therefore have only a small number of parameters. This means that if a user requests a large bandwidth transfer, it may be necessary to send several control messages to create the channel. This introduces extra access delay and consumes signaling capacity.

We are considering several mechanisms to decrease the amount of information that needs to be sent during channel creation and token reallocation. The first optimization in token management is to introduce block tokens. A block token is transferred in a single control message and represents a group of tokens, but can only be used for particular combinations of tokens. For instance, in the network simulations described in this paper, a block token is denoted by a slot number and an offset giving the number of contiguous slots in the group. The block token optimization assumes that the token pool is not fragmented into small pieces. The amount of small token blocks in the free pool, may be a problem and will be referred to as fragmentation.

### 6.1 Slot reuse

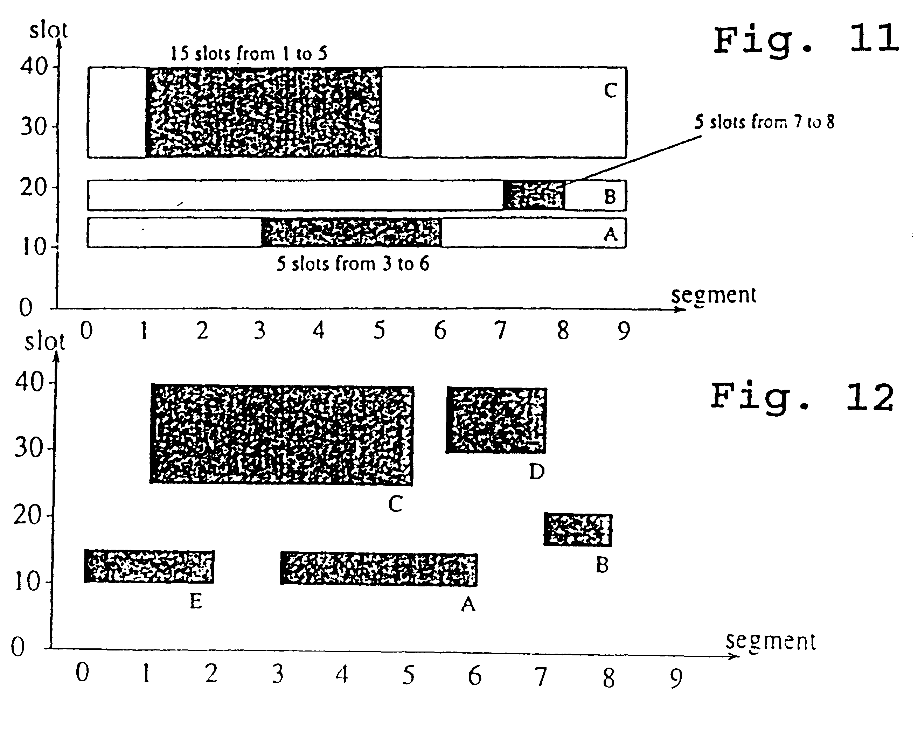

The token protocol guarantees that a data slot can never be used by two nodes simultaneously on the bus. Sometimes this protocol is too conservative. Fig.11 shows an example of how three tokens (A, B, and C) are reserved for three channels. Nodes are connected by bus segments and channels typically use a subset of the segments on the bus (gray color) and the rest are reserved (white color) but left unused and thus wasting shared resources. A better alternative is to let channels only reserve capacity on the segments between the sender and the receiver as the example in Fig.12. A single slot may in this case be used multiple times on the bus. Channel D and E are using the same slots as channel A and C but on different segments. This is referred to as slot reuse. Slot reuse enables simultaneous transmissions in the same slot over disjoint segments of the bus.

Slot reuse is a general method to better utilize shared links in ring and bus networks. The slot reuse algorithms in DQDB (Distributed Queue Dual Bus), Simple and CRMA (Cyclic Reservation Multiple Access) depend on control information in the slots. Buffer insertion networks when combined with destination release as in METARING may reuse capacity of individual links and resolve eventual contention by delaying the incoming packet stream through an elastic buffer.

With slot reuse, the access scheme complexity is increased, regardless of whether it is done in hardware as in DQDB, Simple, and CRMA, or in software, as in DTM. When implemented in systems other than DTM, slot reuse also adds complex hardware to the critical high-speed path through a node and therefore increases the node delay.

To allow slot reuse in DTM the block token format is extended to include parameters describing the segment(s) it is representing. The token management protocol is also modified to avoid conflicts in the slot number dimension as well as the segment dimension. The most important assumption is that no hardware changes to the original prototype implementation were allowed or needed. The performance gain is also quite clear: on a dual-bus where source and destination pairs are uniformly distributed, it has been shown that throughput may be increased by a factor of two. The potential drawback of slot reuse in a DTM network is the higher algorithm complexity and potentially higher load on the node controller and signaling channels (especially if the average channel duration is short).

### 6.2 A central token manager

Two token management schemes were evaluated. The first and simplest is to let a single node controller manage all free tokens on a fiber. This sort of centralized server mechanism has also been used in systems such as CRMA [22], where the head-end node distributes the fiber capacity to all other nodes. We configured the simulator so that for each fiber, a node one third from the slot generator is the token server. A token server will then have about the same amount of traffic on both sides.

Each time a user request arrives at a node, the node first requests tokens from the manager and then locks them throughout the channel life-time. When the user issues a request to disconnect the channel, the tokens are immediately returned to the manager. All requests are delayed during the token request and accesses are serialized through the central manager.

### 6.3 A distributed token manager

The distributed token manager is fundamentally more complicated than the centralized. We tried to keep it as simple as possible. In our method each node regularly broadcasts status information about how many free tokens it has. The other nodes store this information in their status tables. A node that wants more capacity consults its status table to decide from which node to request slots. The protocol on the 'initiating side works as follows, when a user request arrives to a node:
1. If the node has sufficiently many free tokens to satisfy the request, it allocates the requested amount of slots to the user, and starts the channel by sending a channel establishment message to the destination node, and then transmitting data using the reserved slots.
2. Otherwise the node marks its available tokens as being reserved, and then checks its status table: if the total amount of free tokens in the network is not enough to fulfill the request, the request is rejected (blocked). Otherwise the node requests tokens from nodes with unused capacity.

If one of these nodes receiving a token request does not have the requested amount of free slots, it still gives away all slots it has. In any case, it sends a response back to the requesting node. A node fulfills incoming requests in strict FIFO order (First In First Out).

When a node receives a response to a token request, it marks the slots it receives in the response (if any) as being reserved. When the node has received responses to all requests it has sent, it either starts the channels or rejects the user request, depending on if it has acquired sufficient capacity. If the user request is rejected, the reserved slots are marked as free.

At start-up all free tokens are evenly distributed among the network nodes and each node takes at least one of its free tokens, moves it (them) to the active state and declares it (them) to be a control slot. User requests may now be accepted and tokens can be moved between nodes on demand. When the local node contains enough tokens to fulfill an arriving user request, the request may be accepted without any token reallocation.

A weakness with this scheme is that slot reallocation is only triggered by user requests, and user requests are delayed by pending token reallocation. An optimization we have implemented to remedy this is to also perform slot reallocation in the background. This results in less need to reallocate tokens for small to medium sized requests.

The pool of free tokens can be distributed in other ways than uniformly to increase the speed for successful reallocation and usage. If fewer nodes are managing the pool, the channel blocking is decreasing as a result of lesser possibility for tokens to be wrongly reallocated.

The complete token pool is in this case proportionally distributed (nodes near the slot generator will have more tokens than nodes far away from this) among all nodes. The transfers of nodes can occur between each pair of nodes in place of always use the server node. When the local node comprises sufficient number of tokens to satisfy an arriving user request, the request can be accepted without any token reallocation. Further, as long as the arriving user requests are well matched by the pool distribution, no reallocation will ever be necessary.

Several questions need to be answered before deciding how to distribute the token pool. We address the following issues:
1. When local resources in the node are not enough to satisfy a user request, which other node should be asked for more tokens?
2. If a node asks for tokens from several nodes, how many tokens is it going to ask for and should the node reject the channel if it receives a fraction of the requested capacity?
3. If tokens move freely among the nodes, will the token pool be fragmented into small pieces and render the block token optimization scheme useless?

### 6.3.1 Status messages

We decided to use status messages to distribute information about the pool of free tokens. Status message information is used to help a node choose a suitable node when asking for more resources. This method addresses the first question above.

Our scheme works as follows. Each node regularly broadcasts status information about how many free tokens it has. The other nodes store this information in their status tables. A node that wants more capacity consults its status table to decide from which node to request slots. The broadcasted status information gives an approximate view of the current state of token information, so token requests may be rejected because they were sent to nodes that no longer have tokens to give away.

Status tables are "soft" information in the sense that the system will work even if they are out of date or unavailable. They should, however, improve the success rate of reallocation procedures.

### 6.3.2 Avoiding unnecessary rejects

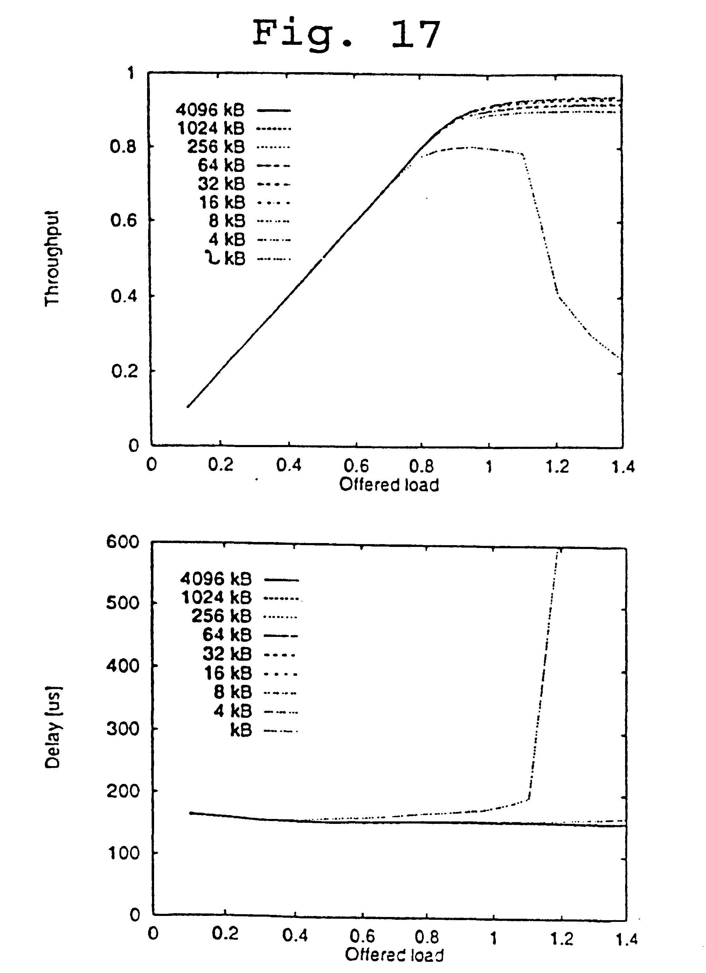

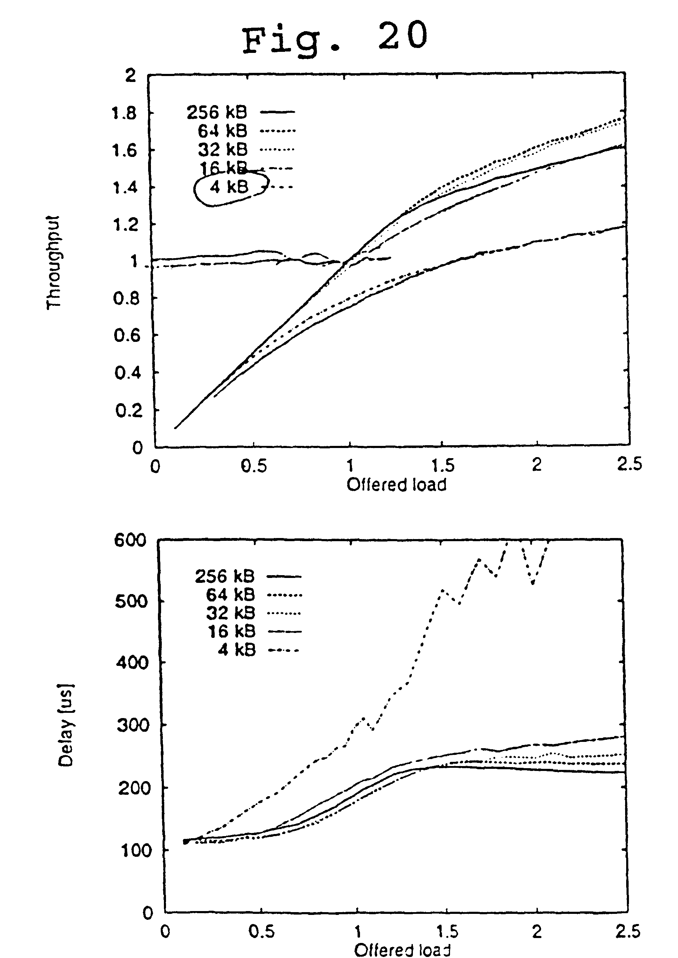

When comparing base performance of the centralized (fig. 17) and the distributed (fig. 20) token management we can see that there exists a new type of reject of user requests which are frequent in the distributed version when there still is unutilized resources in the system.

A node uses the status table to pick node(s) from which to request tokens. When the request reaches the target node the amount of available capacity may have changed and a smaller amount than requested may be returned to the requesting node, resulting in a user rejection.

This behavior results in unnecessary token transfers and waste bandwidth resources as slots are unused during the token transfer. The status message mechanism will also work less efficient when tokens are moved more frequently.

If the pool is distributed proportionally among a great number (hundreds) of nodes, the size of the average pool will be relatively small. When the load is high, the number of free tokens in the pools will decrease even further. If nodes also create and destroy channels at a very high speed, the amount of free capacity in individual nodes will vary between a little amount of capacity and no capacity at all. If now the average capacity which is requested by a user is large in comparison with the number of free tokens of a node, then more nodes must be asked to fulfill the request. At this time the possibility that the requested nodes have no free capacity will lead to a user reject.

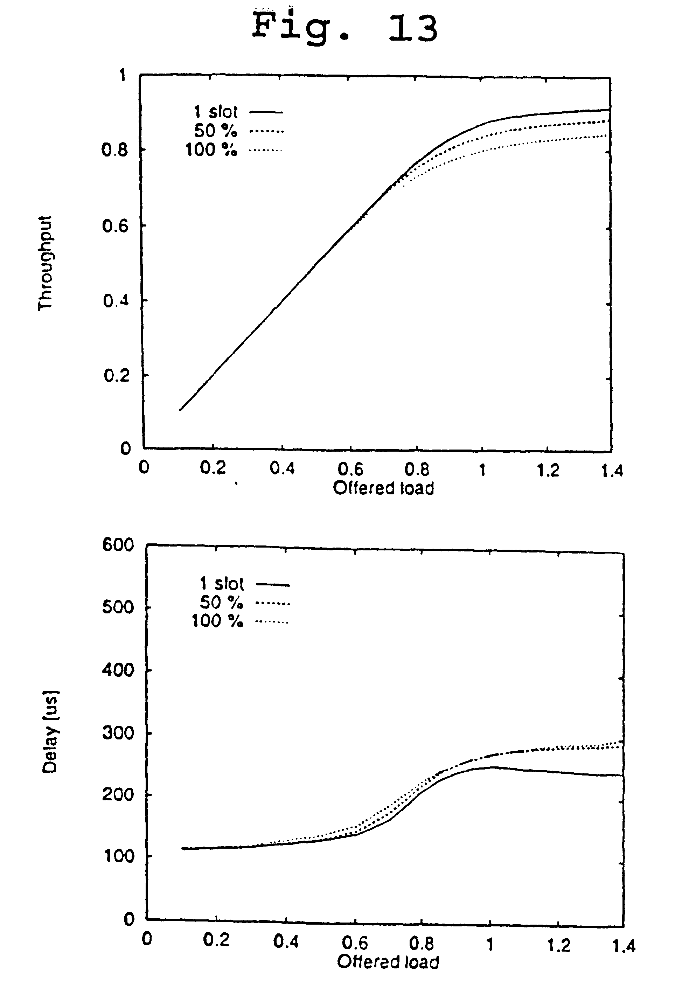

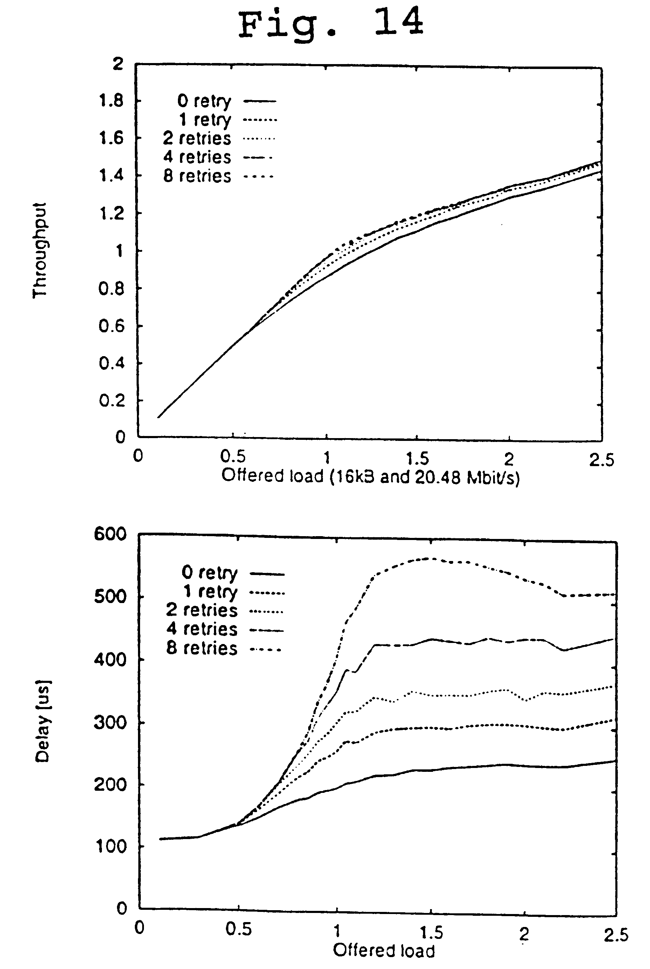

There are many ways to address this problem without going back to a centralized model. Firstly, we do not need to give away any slots at all if the complete request cannot be fulfilled. This protocol is applicable even if only one node is asked about free tokens, but if more nodes are asked it can still result in the movement of tokens or that tokens are locked unused. Secondly if we, after a token request, receive fewer tokens than the number requested, we can simply once again and many times try to request the procedure for token request. This will increase the possibility for a user request to be accepted and that the received tokens will be used. The expense for the repeated examination will be increased signaling and increased access delay and can deteriorate the performance on an overloaded network. Even the repeated attempts by the user leads to longer set up delays for a request which has been submitted repeated examination. Thirdly, the user can sometimes wish to accept a channel with lesser than the requested capacity instead of it being rejected. If e.g. a user receives 50% of what has been requested, he can be willing to accept. In fig. 13 there is disclosed the performance for small (16 kbytes) user requests with different least acceptable capacities [100% (40 slots), 50% (20 slots), and 5% (1 slot)]. A lower average, least acceptable bandwidth will result in a higher utilization. In fig. 14 there is disclosed performance which will be the result if the user is doing repeated attempts up to 8 times before we finally block the request. The utilization will increase (and the blocking will increase) at the expense of more signaling and longer delays. Repeated examination a great number of times will counteract the productivity if it occurs often.

Absolutely, the yield with a flexible user request policy is in lower possibility of rejection and higher total throughput. Either of the configurations disclosed in fig. 13 and fig. 14 can be decided upon at the time when a request is arriving. A user having strict demands on the capacity on a channel can request repeated examination until sufficient capacity is allocated, but another user rather can accept a channel with lesser than the requested amount. For the rest of the simulations presented herein, we define the lower acceptable bandwidth to be 50% of the requested capacity.

### 6.3.3 Fragmentation

In the general case, the average number of contiguous free blocks in a node is small, due to the random movement of tokens and the varying capacity of users request. This fragmentation renders the block token optimization practically useless, and the access delay is relatively long (milliseconds) for high capacity channels. To make block allocation efficient it is necessary to reduce fragmentation of free tokens, otherwise fragmentation will be by far the main contributor to access delay for high bandwidth channels at moderate to high load. Low capacity channels will almost always have a very short channel establishment delay independent of the current amount of fragmentation. In the case of slot reuse, the fragmentation problem is even worse, as fragmentation may occur in both slot (time) and segment (space) dimensions (see Fig.12). This is in the centralized server version a particular application of the general dynamic storage-allocation problem. In the distributed token manager most of the fragmentation is a result of using many free pools (one for each node). Two free adjacent tokens can only merge if they are found in the same node.

We have implemented a mechanism called the defragmentation scheme that tries to avoid fragmentation if possible and increases the average block size of free tokens in the nodes. The scheme is used both with and without slot reuse.

### Our scheme works as follows:

1. Define a home node for each token at network startup and distribute tokens in such a way so tokens sharing the same home node will always define a continuous slot range. This results in a large average token area in the token map shown in Fig.12.
2. When two slot-consecutive tokens with the same slot or segment range exist in the free pool, merge them into a single token (sometimes a recursive split and merge operation is needed). When doing a merge, always prioritize segment merge before a slot number merge. The reason for this is that tokens spanning over just a few segments are less useful to other nodes than tokens spanning over many segments.
3. When a node gets a token request from the local user or a remote user, pick a token from the token pool using a best-fit algorithm in slot number and segment number dimension (see Fig.12). The value of a token is calculated as the area of a token in the token map and we try to pick the token with the smallest area that fulfill the requested capacity.
4. When a node needs to request tokens from other nodes, it does not ask for small chunks from several nodes if it is possible to ask for larger chunks from fewer nodes. The status tables provide this information. Transfer of tokens is therefore more efficient, and there are fewer establishment messages and less fragmentation.
5. Free tokens are sent back to home nodes when they have been idle for a significant time or after a long transfer.

This scheme returns tokens to "home" nodes as a way to increase the probability that two consecutive tokens can be merged in the free list. If home node "gravity" is too strong, the scheme will result in less sharing of resources and unnecessary signaling. If it is too weak, fragmentation will still remain a problem.

To evaluate the defragmentation mechanism we performed another set of simulations. We designed three different simulators [A, B, C]. The simulator A was configured to not have any fragmentation at the start time for simulation and to use the defragmentation plan described above, B started with maximal fragmentation of the complete resource pool. All the tokens had only one slot and no tokens in the home nodes were connected before the defragmentation mechanism. Finally, the simulator C was started without the use of the defragmentation mechanism and with the pool which has the maximal fragmentation. In all the cases the slot reuse was switched on and the load was defined to be 80%.

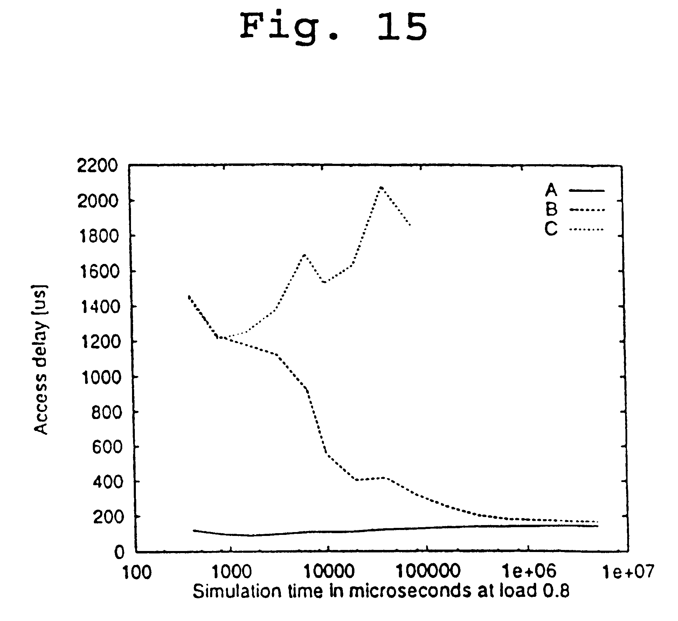

Access delay as a function of simulated time is disclosed in fig. 15 for a network of 10 km. The simulator C started with a long access delay and the delay increased when the signal channels were overloaded and the message queues increased. The simulator B utilizing the defragmentation mechanism starts exactly as badly as C, but already after 10 ms the average access delay is below 500 ms. Later, when a second of simulated time had elapsed, the B-curve is connected in the most nearest with A, i.e. it converges if the performance of the simulator is started without any fragmentation at all. The converging speed depends on the amount of free capacity in the network and consequently on the load. The load during all these simulations was 80%. The defragmentation mechanism clearly improves the access delay and does even do the block token optimization meaningful in the distributed realization.

### 6.4 DTM performance

We are mainly interested in two kinds of performance measures in this paper: utilization and access delay. Utilization is the portion of the nominal network capacity that is actually used for data transfer, and is a measure of the efficiency of the network. Access delay is the time from the arrival of a user request to the sending of the first data of the request, which we think is an important measure for how well computer communication traffic can be supported.

There are two main factors that influence utilization in DTM. First, each node is assigned signaling capacity in the form of control slots, which means that there are fewer slots available for data transfer on a bus with many nodes, given a fixed link capacity. Secondly, token reallocation incurs overhead since while a slot token is being reallocated between nodes, the corresponding slot cannot be used for data transfer.

Access delay depends mainly on the load on the control slots, and on how many control messages that need to be sent to establish a channel. The access delay is typically a summation of several delays (and typical values): Node controller processing delay [5 us], delay in finding and allocating free tokens [100 us], waiting for the first available control slot to pass [50 us], and finally waiting for the first allocated data slot to be filled with user data [62.5us]. In addition, messages are delayed in queues at the input to node controllers waiting to be processed. In the simulations presented in section 5.2 the average delay is up to a few hundred microseconds.

### 7. Network simulations

In the simulation model, each transfer starts with the arrival of a new "packet" of information. The node controller tries to allocate resources for the transfer, transmits the packet and finally releases the channel. This is a simplification of the mechanisms in a real system, where channel set-up, data transfer and channel teardown are independent operations initiated by the user. For example, a user that knows that a transfer is about to take place may "hide" the channel establishment delay by requesting a channel in advance, so that it is already established when the transfer starts. Between a set-up and teardown, the capacity of the channel is completely reserved for the user. The most straight-forward use of the channel is for a single transfer, such as a file transfer or a video transmission.

Depending on the characteristics of the application, it is possible to optimize the usage of the channel. For instance, a channel may be used to transfer sequences of higher level messages such as ATM cells or IP packets. If it is a multicast channel, messages to different destinations can be multiplexed onto it. This means that each message will reach every receiver on the multicast channel and receivers must be able to filter messages. An alternative solution is to create and destroy a channel for each message, but reserve the tokens between messages so that the tokens are readily available for the next message in the sequence. We do not incorporate this type of user behavior in the simulations, since they are optimizations for particular applications. Instead we focus on how the network performs without user level optimizations.

The sender may start sending data as soon as the resources are allocated, even before the receiver receives the channel establishment message. This is called fast channel establishment. The receiver will eventually respond with a control message to accept or reject the channel.

User requests have the following parameters:
* Packet size which is the amount of user data transferred between channel establishment and channel release. We simulate packet sizes from a few kbytes up to a few Mbytes.
* Requested capacity for a channel, which is the number of slots that a node tries to allocate. For all the simulations in this paper the requested capacity is fixed to 40 slots or 20.48 Mbit/s.
* Minimum acceptable capacity. A node blocks a request if it cannot allocate this number of slots. This is normally set to 40 or 20 slots (100% or 50% of requested capacity).
* Source address.
* Destination address.

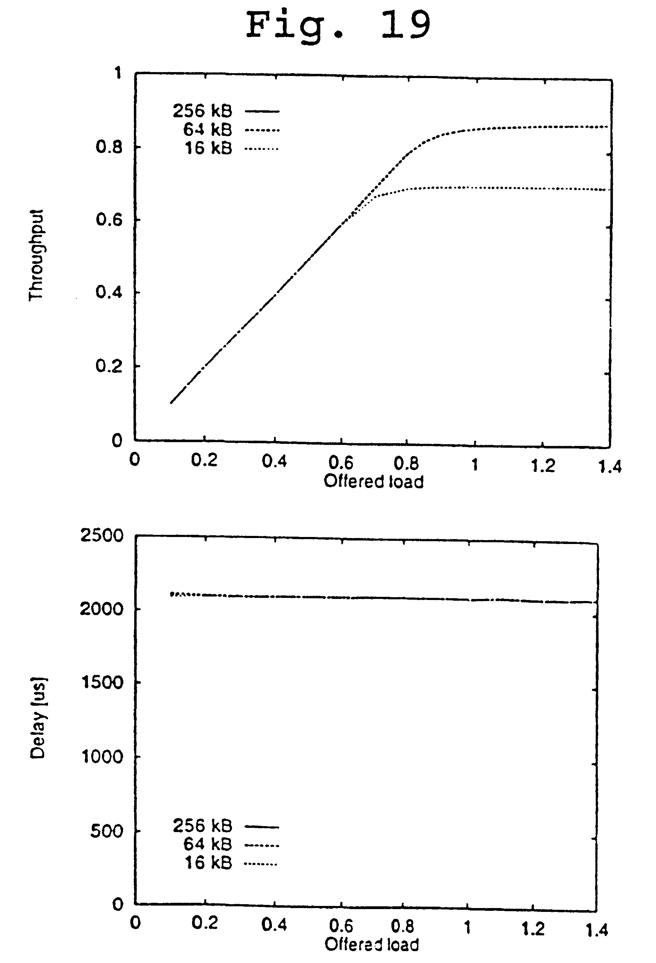

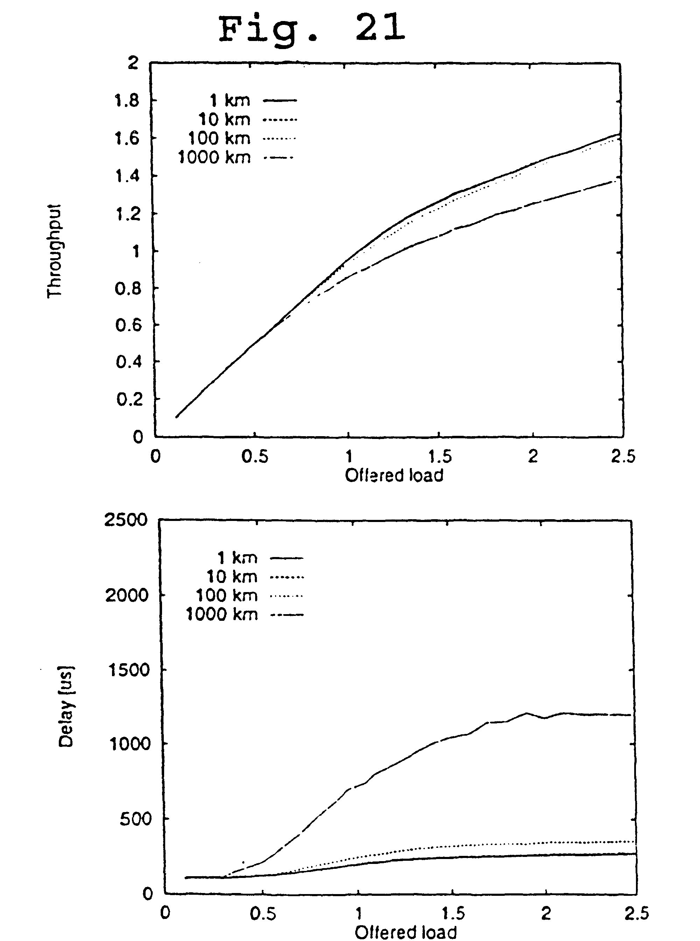

The source and destination addresses are generated randomly (all nodes with the same probability) and user inter-arrival times are exponentially distributed. The simulations investigate the effect of signaling capacity and slot reallocation overhead on utilization, channel set-up delay, and blocking. We simulate a topology with the following characteristics:
* A dual bus network with 100 nodes. Even though it is theoretically possible to connect many more nodes to a bus, we think that management of networks with more than 100 nodes on a bus may be infeasible. With 100 nodes the capacity sharing is significant enough to exercise and test the token management protocol.
* The capacity of each bus is 6.4 Gbit/s. We believe such a capacity is realistic for what is realizable within a year or two; 2.4 Gbit/s optical links have been available for a few years, and 10 Gbit/s links have been announced to appear soon on the market. 6.4 Gbit/s corresponds to 100 MHz slot rate, which is the rate at which the slot processing MAC hardware would operate. 100 MHz is attainable with current CMOS technology.
* The total signaling capacity is the same for all nodes, but the slots are partitioned between the two fiber directions proportionally, depending on where the nodes are located on the bus. The closer a node is to the slot generator the more control capacity is needed. The sum of the control capacity on both buses will however be the same for all nodes. In the network with two token servers, the servers have more control capacity and higher processing capacity than the other nodes.
* The length of the bus is 10 km, which gives a large enough network that the effects of propagation delay are not negligible. We further study the effects of propagation delay in the simulations in Fig.19 and Fig.21, which use bus lengths of 1 km, 10 km, 100 km and 1000 km.
* Two different token management schemes are simulated: an asymmetrical scheme where all the tokens on one fiber are managed by a single token server and a symmetrical scheme where each node controller manages a small piece of the global token pool.

### 8. Performance

### 8.1 Ideal protocol

When analyzing the performance of the DTM dual-bus network, the issue of maximum theoretical performance must be addressed and compared to the simulated performance. The maximum theoretical performance is also used in this paper to compare the different schemes and implementations we are evaluating.

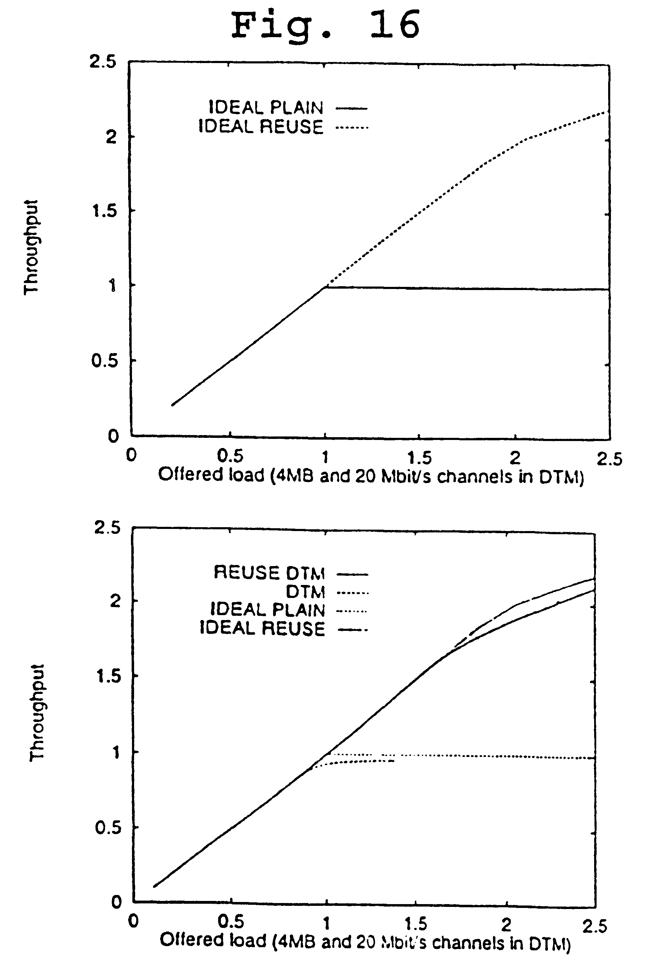

The maximum throughput of a dual-bus system without slot-reuse, can be defined as twice the link capacity, given that both fibers receive the same traffic. In a system with slot reuse the system throughput also depends on the source destination distribution. To obtain this throughput for the dual-bus we used a Monte Carlo simulation where source and destination addresses were uniformly distributed (see left graph Fig.16). In the right graph in Fig.16, performance of a DTM network is included. The DTM network uses a centralized token manager and users request to transfer 4 Mbyte of information each time. In this system, signaling capacity is not a bottleneck and utilization is found to be close to the ideal case. Real traffic behaving like this is bulk-data transfers and audio/video streams. The small differences that are shown are results of: First, some capacity is in DTM used for control slots lowering the available number of slots to be used by data transfers. Second, random generators for the DTM simulations do not generate exactly the same amount of traffic in upstream and downstream directions, and may result in blocking in one of the directions when capacity is available in the other. Third, during channel establishment resources may be locked unused momentarily, wasting some capacity.

### 8.2 Central token manager

In the case of a central token manager the two managing nodes need more signaling capacity than other nodes (we assign 8 times as many control slots to a server node than to other nodes).

Results of the first set of simulations are presented in Fig.17. Users request 20 Mbit/s channels, inter-arrival times are exponentially distributed (generated by a Poisson process) and the simulations are performed with different packet sizes. If the full capacity of the channel cannot be allocated, the request is rejected and tokens are returned to the token server. Packet sizes vary from 4 Mbyte to 2 kbyte, at which point we begin to see throughput degradation.

Throughput degradation may occur if processing capacity in nodes or control channel capacity is too small. The server nodes may be especially overloaded. The result is that queues containing control messages start growing very big. The control tokens represent unused capacity, and therefore the throughput is degraded.

In the 4 kbyte per channel simulations, the control capacity is the limiting factor and if more control slots (signal capacity) are added, 4 kbyte and even smaller packets can be more efficiently supported.

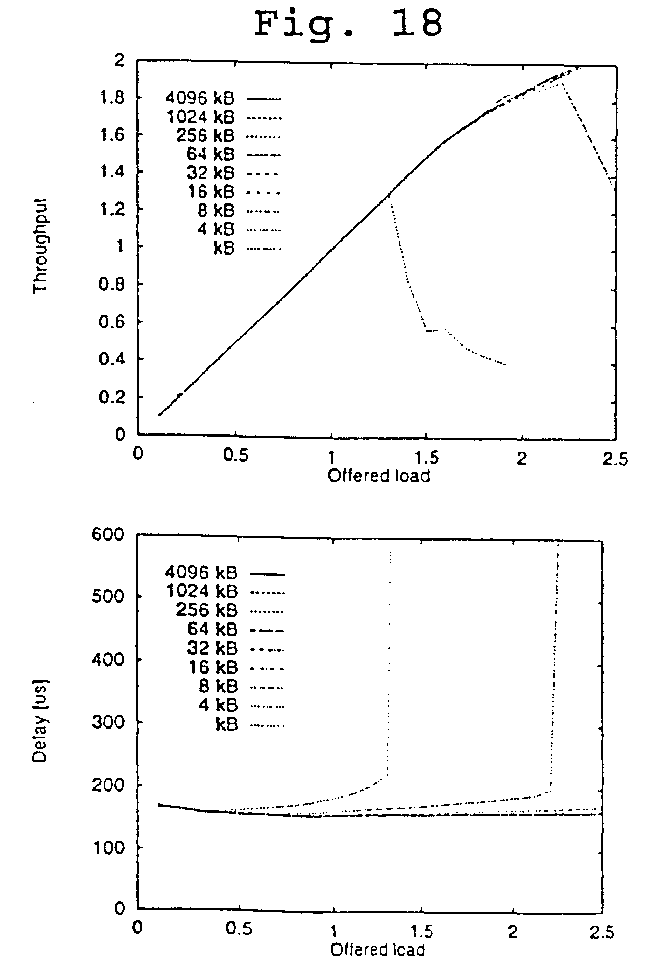

The next set of curves, in Fig.18, show how the slot reuse mechanism improves the performance of the system. Throughput increases by almost a factor of two before any significant number of channels are rejected. The uniform source and destination distributions of channels limit the amount of increased capacity gained by slot reuse. It has been shown that if the source and destinations are generated evenly, as we do, throughput may be doubled on a dual bus. In the simulations it may also be seen that beyond an offered load of 2.5 we may actually get throughput higher than 2.0. This level of throughput, however, cannot be reached without some channels being rejected. The channels with the highest probability of being rejected are the ones that use many slots or segments. Therefore the system "filters" less greedy user requests and throws away the rest. This is normally not an acceptable behavior and we therefore do not investigate this any further.

Throughput degradation occurs at an offered load of 1 with the 4 kbyte transfers. Even if we have enough resources in the token server, we cannot establish and destroy, channels fast enough as the control channel is congested. Further, we also see a throughput degradation of the 8 kbyte simulations at an offered load of 1.8, for the same reason.

It may be concluded from the simulations in Fig.18 that the slot reuse mechanism almost doubles the system throughput with only minor changes to the centralized token protocol, as long as the control and server processing capacity is not a bottleneck. From the curves it can also be seen that access delay actually decreases when the load increases from 0.1 to 0.5. This is a result of how slots are assigned to a channel and is not related to the token request procedure. The time it takes to request tokens from the server is strictly increasing with the load.

When comparing the DTM performance in Fig.18 and the theoretical values in Fig.16, we see that even short bursts (a few milliseconds duration) can be supported efficiently.

### 8.2.1 Performance of the central token server as a function of bus length

When a single token server is used, each channel establishment requires a token to be requested from the server. If the length of the bus is increased, the token request will take a longer time and may therefore also limit the throughput and increase the access delay.

In Fig.19 we increased the length of the bus by a factor of 100 to 1000 km (node to node delay is now 50 µs). Both access delay and throughput may now be limited by the round-trip latency to the token server.

Access delay in this case depends on the distance to servers, but is independent of the transfer size. Throughput depends strongly on the average transfer size as the establishment phase is amortized over the data transfer phase.

Channels transferring large amounts of information such as 256 kbyte with a duration of one tenth of a second are still efficiently supported when the bus length is 1000 km.

### 8.2.2 Discussion

Utilization of a centralized token manager has several benefits. Clients may be simple as they only contain state information related to their own opened channels. Slot reuse is also simple and efficient, as the slot server has all of the free tokens to choose from when trying to satisfy a user request. The server may also implement other policy related functions such as admission control and fairness. The fragmentation of the free token pool in the server is normally very modest, resulting in very few connection establishment messages per channel even for high capacity user requests.

There are also drawbacks. A user that frequently establishes and destroys channels may introduce excessive signaling by always returning tokens after use, but then requesting the tokens again within a short time period. The processing capacity of the server node may get overloaded if there are many nodes on the bus or if the average packet size is very small. If the media length is very large relative to the product of bit-period, bits-per-packet and media velocity, the round trip time to the server may also limit performance. Finally, the server node contains state information that all nodes depend on to create channels. A server node failure may therefore affect all the nodes.

### 8.3 Distributed token control performance

In this section we simulate and investigate the properties of a fully distributed token manager.

### 8.3.1 Distributed token manager

When evaluating the performance of the distributed token manager with slot reuse and defragmentation, we used the same traffic and parameters as in Sect. 5.2, but used a policy whereby requests are accepted if 50% of the requested capacity can be allocated.

The results presented in Fig.20 are from the simulations with slot reuse, a fully distributed token manager, status messages which describe how much capacity a node possesses, and the defragmentation scheme. All the nodes have the same process capacity and the process load is much lower than the load the servers in fig.18 are receiving. The dependencies between nodes are also much lower, which results in a higher extent of reliability. The system performs better than any system without slot reuse, but not as well as the centralized system described earlier.

Compared to the centralized scheme (see Fig.18) blocking is higher and starts at a lower load.

A not expected result was that the performance in reality decreased when the packet size increased! After once again having checked up the results we found that a large average transferring size results in lesser mobility for tokens and that the status information in reality gives an even worse appearance on free resources in the network than for short transfers. In this case a request is rejected, if we do not believe that we will find any resources. This mechanism was introduced to avoid wasting control capacity when the resources were drained.

The reason for this is that the status messages only describe "global" tokens which cover all the segments on the bus. A global token can be utilized by any node and is the only type of token in a DRM-system without slot reuse. At loads higher than 1.0, a great number of tokens are segmented and the reuse scheme needs them at new requests. The status message mechanism which we are using, which was designed for a system without reuse, is therefore limited in its ability in helping new requests to find free capacity and can in the worst case result in a higher degree of blocking.

### 8.3.2 Performance of the distributed token server as a function of bus length

The throughput and access delay of the distributed token manager with varying bus lengths from 1 km to 1000 km are presented in Fig.21. A 16 kbyte packet is sent between establishment and tear-down of the channel. The 1 km and 100 km buses give about the same throughput and access delay as the 10 km bus, because the latency introduced by using a 125 us cycle dominate over the time of flight latency in the system. For the 1000 km long bus, we see that the access delay is found to be shorter than in the 1000 km system using a centralized token server (see Fig.19). At low load tokens are found very close and access delay is about the same for all systems independently of bus length. Even at very high load the access delay is about 1 millisecond shorter than it is in the centralized system in Fig.19

### 8.3.3 Bursty and client-server traffic conditions

The centralized token manager system will have the same performance almost independently of the traffic as long as processing and signaling are sufficient. To evaluate the distributed system, we decided to use two other traffic generators. First, we use a generator that simulate user requests arriving in bursts: when a request arrives, a new request is generated to arrive with 90% probability after 200 us. The result is that bursts of requests arrive to nodes and force high temporal locality of source addresses. Second, to generate traffic more similar to client-server behavior we increase the amount of traffic arriving to 5 server nodes, 0, 25, 50, 75, and 99. Even the probability for a server destination is also higher.

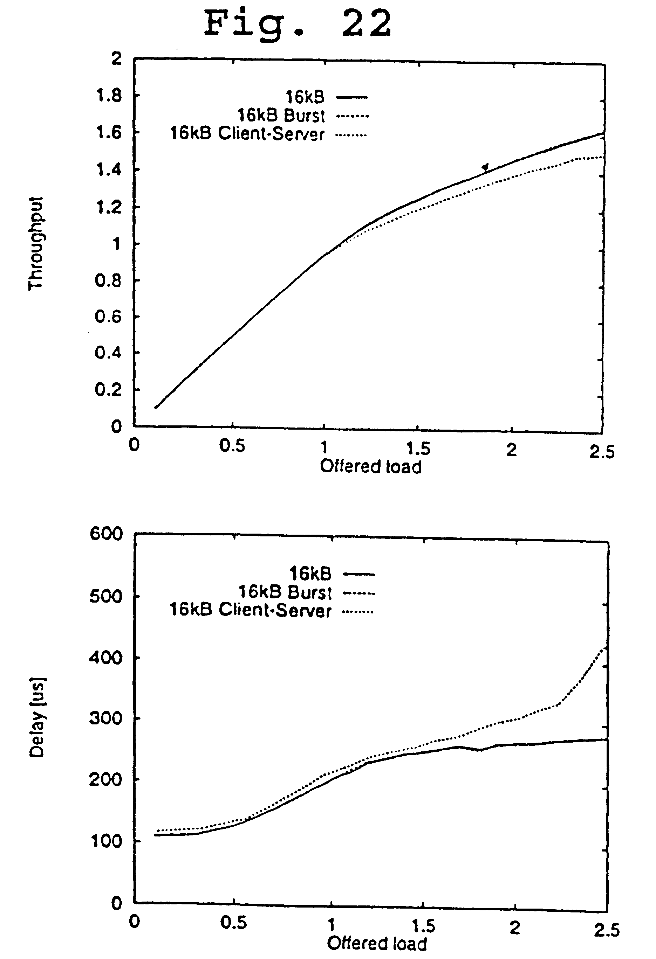

In Fig.22 we present throughput and access delay performance of the distributed token server system.

### 8.3.4 Discussion

It is clear that the distributed implementation have several benefits compared to the centralized token server: The nodes may share the processing load, there is less need for high-performance token servers, redundancy may be higher and access delay may be shorter for low capacity request. It also scales to longer busses. The drawback is higher blocking. It is also clear that the status messageand status table mechanism must be changed to avoid unnecessary blocking when slot reuse is allowed.

### 9. Future work and conclusions

We have shown that the DTM fast circuit switching protocol performs well in a dual-bus shared media environment. Two slot (token) management schemes are analyzed. The centralized scheme perform closest to the ideal protocol and is relatively simple.

The distributed scheme is more sensitive to user behavior, relies on status information that is broadcast frequently, and needs a defragmentation scheme. The main advantage with the distributed scheme is that it efficiently decouples the access delay from the round-trip time on the bus.

One result is that the status message scheme does not work well with slot reuse and future work is to redesign it. Further work is to evaluate a scheme that combines the distributed and the centralized token manager using a small set of token server nodes.

The conclusions are that channel establishment overhead can be very small, resulting in high utilization even for small (a few kilobytes) transfers. Access delay is found to be a few hundred microseconds even at high load. The slot reuse scheme can increase the throughput performance by a factor of two and can be implemented without introducing any extra hardware in the nodes.

### 10. Supplement

The network is not limited to a dual bus, but can be realized with all types of structures, e.g. a ring structure with an arbitrary number of nodes. The transmission medium can, except optical fiber, be coaxial cable or another transmission medium with a high bandwidth. In the description the transmission medium will be referred to as optical fiber. The bandwidth of the DTM dual bus is, in the preferred embodiment, partitioned in 125 µs cycles, which in turn are partitioned in time slots of 64 bits. The present invention is not limited to DTM networks with these values, but can be used in networks with cycles and time slots with arbitrary size.

The increase of performance with time slot reuse is clear: at a dual bus where the source and destination pairs are distributed uniformly the throughput has proved to increase with a factor two. The increase of performance can be even higher in other types of networks; i.e. in a dual ring structure with the source and destination pairs distributed uniformly, the throughput can be increased with a factor 4.

A consequence of the DTM's time slot reallocation mechanism is that it takes longer time to establish channels which need greater bandwidth. This "trade-off" can be justified: the type of traffic demanding low medium access delay is normally less sensitive to the bandwidth allocated for the transferring, and such traffic can therefore be accepted without much involving of the reallocation protocol. For transfers demanding greater bandwidth, the access delay will be higher and the reallocation protocol will almost always be used. However, the broad band transfers will probably be less sensitive to access delays.

The simulations described above have shown that the fast circuit-switched protocol of DTM performs well in a dualbus-divided medium environment. Two time slot management schemes are analyzed and both are performing well and can take advantage of time slot reuse. The centralized scheme acts nearest the ideal protocol and is at the same time easier to implement. The distributed system is more sensitive to user performance and must therefore rely upon status information which is sent frequently, and upon the defragmentation mechanism to decrease the number of control messages needed for channel establishing and timeslot reallocation. By using the distributed model with defragmentation mechanism on long buses, better performance can be achieved than when using the centralized model. A resource management system which combines the centralized and the distributed model is also possible by using a smaller set of token server nodes.

Furthermore, the connection establishing overhead can be very low, which results in a high degree of utilization even for small (a few kbyte) transfers. The access delay is some hundred micro seconds even at high loads. The time slot reuse method can increase the performance with a factor two (on a dual bus) without the adding of additional hardware to the nodes. When the time slot reuse method is used it is even more important to use the defragmentation method because fragmentation can be performed both in time slot and segment way.

### 11. Further detailed description and comments to the description above

In the description above is specially described a centralized system characterized in that only one home node exists for all tokens and in that free (idle) tokens always return directly to the home node.

In the completely distributed system all nodes are home nodes (server nodes) and tokens are evenly distributed among all the home nodes.

With the defragmentation method tokens can even be moved back to their home nodes after the elapse of a significant time (e.g. when they have been free (idle) a certain time, so called "idle-time" or when they have not been in their home node for a certain time, so called "last home-time"). One uses the work gravitation - low gravitation corresponds to long significant time and high gravitation corresponds to short significant time. The centralized system mentioned above will have an infinite high gravitation (significant time = 0) and the distributed system without defragmentation mechanism will have gravitation = 0 (significant time = ∞).

It will be pointed out that the resource management scheme is applicable on anything between these special cases. The number of home nodes can vary from 1 to the overall number of nodes. The gravitation can independently vary from 0 to infinity. A uniting of adjacent block tokens, the uniting in segment direction ought to be prioritized before uniting in time slot direction.

We are giving some examples in connection to the accompanying drawings to clarify.

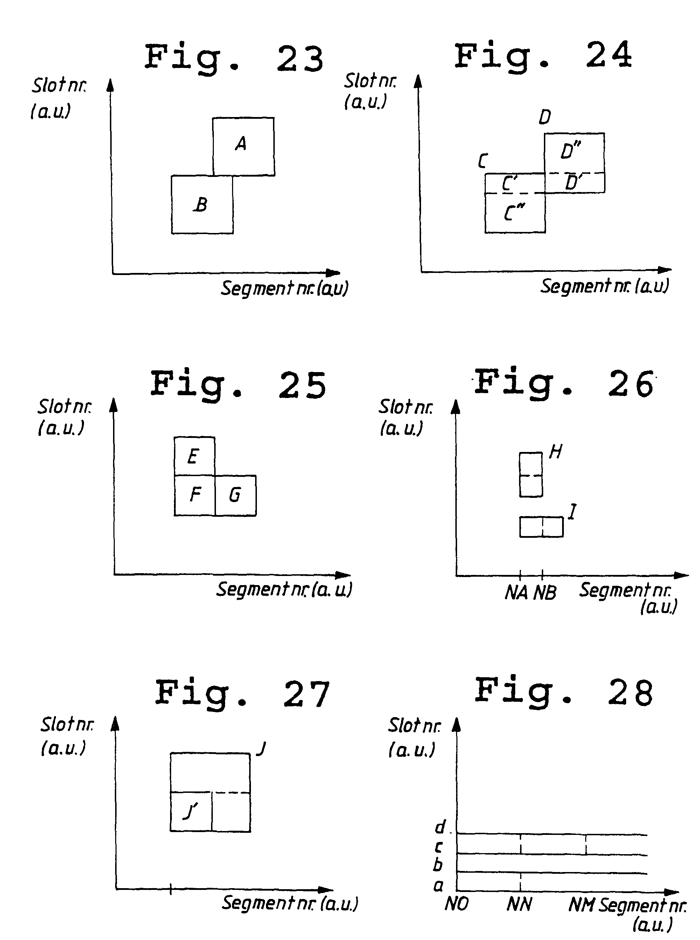

In fig. 23 there is disclosed a token graph with two time slot sensequtive block tokens A and B. Normally no partitioning/uniting is performed because the segments then would be shorter.

In fig. 24 there is disclosed two segment consecutive block tokens C and D. Normally, partitioning of the two block tokens C and F is performed according to the broken line. Thereafter is performed uniting of the two formed block tokens C' and D' to a token C'D' with twice as long segment. This results in total in three new block tokens, C", D", and C'D'.

In fig. 25 there is discussed three block tokens E, F, G. Preferably, F and G are united to FG to increase the segment size.

In fig. 26 there is disclosed two block tokens H and I. The requested capacity corresponds to half of H and all of I and shall be sent from node A, NA to node B, NB. H is chosen for transportation, which is partitioned according to the broken line.

In fig. 27 there is disclosed a token I. The requested capacity corresponds to half of I and shall be sent from node A, NA to node B, NB. A part of I is chosen for transportation, which part is laid in the upper side or as in fig. 27 in the lower side of I. The remaining part must then be partitioned (the block token is normally rectangular). Preferably, this is performed according to the broken line to preserve as large a segment as possible.

Of course, it does not have to be in this way. In some applications one can contemplate uniting in time slot direction before uniting in segment direction.

Normally, the status table only contains information about time slots which are free over all segments. One can also contemplate that even information about segment can be found in these status tables. It will, however, be much more information to spread to the remaining nodes.

Another mechanism which preferably can be implemented will be described below in connection to fig. 28. If node O, NO, has access to the capacity (b-a) and over all segment, but shall send the capacity (b-a) only to node N, NN, then it has no use of the segments NN and thereover. These can then be sent to NN for future demands. The same way if node N, NN has access to the capacity (time slots) (d-c) and shall send this capacity to node M, NM, then it will send even the free segments NM and thereover to the node M, NM for future demands. The token block (NO-NN)*(d-c) will be sent down to the node O, NO, for eventual future demands. In this connection there is required extra signaling whereby this token block (NO-NN)*(d-c) can be sent with an eventually lower priority.

## Claims

1. A method for centralized management of the capacity in a circuit-switched network with a bus or ring structure, which network uses a bandwidth which is partitioned in cycles, which in turn are partitioned in control time slots for signaling and data time slots for transfer of data, and wherein each data time slot is associated with a token,
**characterized in**
- that a first node, called server node, is allocated tokens corresponding to all data time slots which are flowing in one direction in a bus or a ring,
- that a second node requests tokens corresponding to a certain capacity from the server node,
- that the server node makes reservations for and transfers tokens corresponding to the requested capacity to the other node in event that the server node has the requested capacity unutilized, and
- that transferred tokens are retransmitted to the server node and released when corresponding data time slots have not been used for transferring of data of the other node during a significant time.

2. A method according to claim 1, **characterized in** that the method is implemented in a network of DTM-type (Dynamic Synchronous Transfer Mode).

3. A method according to claim 1 or 2, **characterized in** that transferred tokens are retransmitted to the server node and released when corresponding data time slots no longer are used for transferring of data.

4. A method according to any one of claims 1-3, **characterized in** that the server node is chosen as the node which has 1/3 of the nodes situated upstream and 2/3 of the nodes situated downstream.

5. A method for distributed management of the capacity in a circuit-switched network with a bus or ring structure, wherein the bandwidth is partitioned in cycles, which in turn are partitioned in control time slots for signaling and data time slots for transfer of data, and wherein each data time slot is associated with a token (write access), **characterized in**
- that at least two nodes, called server nodes, are defined among which are distributed tokens corresponding to all data time slots which are flowing in one direction in a bus or a ring,
- that a node is requesting tokens corresponding to a certain capacity from at least one of the server nodes,
- that this server node makes reservations for and transfers tokens corresponding to the requested capacity to the requesting node in the event that the server node has the requested capacity unutilized, and
- that transferred tokens are retransmitted to the respective server node, and are released when corresponding data time slots have not been used for data transferring during a significant time.

6. A method according to claim 5, **characterized in** that the method is implemented in a network of DTM-type (Dynamic Synchronous Transfer mode).

7. A method according to claim 5 or 6, **characterized in** that several server nodes are asked, make reservations for and transfer tokens, which together correspond to the completely requested capacity, to the requesting node in the event that the server nodes together have the requested capacity unutilized.

8. A method according to any one of claims 5-7, **characterized in** that received tokens are used for establishing of channels by sending of a channel establishing message to the node or the nodes which are designated receiver of data in the event that a node has received tokens corresponding to the requested capacity.

9. A method according to any one of claims 5-7, **characterized in** that one or several server nodes makes reservations for and transfers tokens corresponding to all of the unutilized capacity to the requesting node in the event that the server nodes together do not have the requested capacity unutilized.

10. A method according to any one of claims 5-7, **characterized in** that one or several server nodes are not transferring any token to the requesting node in the event that the server nodes together do not have the requested capacity unutilized.

11. A method according to claim 9 or 10, **characterized in** that further tokens are requested by a node in the event that possibly received tokens do not correspond to the requested capacity.

12. A method according to claim 9 or 10, **characterized in** that tokens received in a node are released in the event that these tokens do not correspond to the requested capacity.

13. A method according to claim 9 or 10, **characterized in** that received tokens are used for establishing of channels by sending of a channel establishing message to the node or the nodes which are designated receivers of data in the event that a node has not received tokens corresponding to the requested capacity.

14. A method according to any of claims 5-13, **characterized in** that each server node regularly sends information regarding its idle capacity to the rest of the nodes and each node stores in a status table information received from the other nodes.

15. A method according to any one of claims 5-14, **characterized in** that a node requests tokens from the server node which for the moment has the most unutilized capacity.

16. A method according to any one of claims 5-14, **characterized in** that a node requests tokens from the server node which is closest and for the moment has the requested capacity unutilized.

17. A method according to claim 15 or 16, **characterized in** that the server node from which capacity is requested will be found by referring to the status table.

18. A method according to any one of claims 5-17, **characterized in** that all nodes in a bus or a ring are defined as server nodes and are allocated at least one token.

19. A method according to claim 18, **characterized in** that all nodes in a bus or a ring are allocated the same number of tokens.

20. A method according to any one of claims 5-19, **characterized in** that transferred tokens are retransmitted to the respective server node, and are released when corresponding data time slots no longer are used for data transfer.

21. A method according to any one of claims 5-19, **characterized in** that transferred tokens are released when corresponding data time slots no longer are used for data transfer.

22. A method according to any one of claims 1-21, **characterized in** that consecutive tokens in a node are represented by a token, called block token, which is indicated as a number on the first time slot in a row and the total number of time slots in the row.

23. A method according to any one of claims 1-22, **characterized in** that a token is partitioned into at least two tokens corresponding to the same time slot, but to different segments, where a segment refers to a part of a transmission medium which is connecting at least two nodes.

24. A method according to any one of claims 1-23, **characterized in** that the server node, in the event that it has several time slot- or segment-consecutive groups of tokens to choose among, makes reservations for and transfers the tokens which originate from the smallest group of time slot- or segment-consecutive tokens which satisfies a request of capacity, and wherein the smallest group is defined as the group which product of time slots and segments with predetermined weights is the lowest.

25. A method according to any one of claims 1-24, **characterized in** that groups of tokens, which are at least partly segment-consecutive, are regrouped to maximize the number of consecutive segments for each group of tokens at the expense of the number of consecutive time slots.

26. A node control unit in a node in a circuit-switched network with a bus or ring structure, which network uses a bandwidth which is partitioned in cycles, which in turn are partitioned in control time slots for signaling and data time slots for transfer of data, and wherein each data time slot is associated with a token, **characterized in**
- that the node control unit is allocated tokens corresponding to a predetermined number of data time slots which are flowing in one direction in a bus or a ring,
- that the node control unit is arranged to make reservations for and to transfer tokens to a second node control unit in a second node in the event that it receives a request for tokens from the second node control unit and that it has requested capacity unutilized, and
- that the second node control unit is arranged to retransmit the transferred tokens to the node control unit and to release them when corresponding data time slots have not been used for transferring of data of the second node control unit during a significant time.

27. A node control unit according to claim 26, **characterized in** that the network is of DTM-type (Dynamic Synchronous Transfer Mode).

28. A node, also called server node, in a circuit-switched network with a bus or ring structure, which network uses a bandwidth which is partitioned in cycles, which in turn are partitioned in control time slots for signaling and data time slots for transfer of data, and wherein each data time slot is associated with a token, **characterized by** a node control unit, which is allocated tokens corresponding to a predetermined number of data time slots which are flowing in one direction in a bus or a ring, and is arranged to make reservations for and to transfer tokens to a second node control unit in a second node in event that it receives a request for tokens from the second node control unit and that it has requested capacity unutilized.

29. A node according to claim 28, **characterized in** that the network is of DTM-type (Dynamic Synchronous Transfer Mode).

30. A node according to claim 28 or 29, **characterized in** that the node is allocated tokens corresponding to all of the data time slots which are flowing in one direction in a bus or a ring.

31. A node according to claim 30, **characterized in** that the node has 1/3 of the nodes of the bus or the ring upstream and 2/3 of the nodes of the bus or the ring downstream.

32. A circuit-switched network of a bus or ring structure, which network uses a bandwidth which is partitioned in cycles, which in turn are partitioned in control time slots for signaling and data time slots for transfer of data, and wherein each data time slot is associated with a token, **characterized by** a node, also called server node, being allocated tokens corresponding to a predetermined number of data time slots which are flowing in one direction in a bus or a ring, and is arranged to make reservations for and to transfer tokens to a second node in event that it receives a request for tokens from the second node and that it has requested capacity unutilized.

33. A circuit-switched network of a bus or ring structure, which network uses a bandwidth which is partitioned in cycles, which in turn are partitioned in control time slots for signaling and data time slots for transfer of data, and wherein each data time slot is associated with a token, **characterized in** that at least two nodes, called server nodes, are defined among which tokens corresponding to all data time slots which are flowing in one direction in a bus or a ring are distributed and in that the server nodes are arranged to make reservations for and transfer tokens to a third node in event that the server nodes receive a request for tokens from the third node and that they have the requested capacity unutilized.

34. A circuit-switched network according to claim 32 or 33, **characterized in** that the network is a network of DTM-type (Dynamic Synchronous Transfer Mode).

35. A circuit-switched network according to any one of claims 32-34, **characterized in** that a node is arranged to use received tokens for establishing of channels by sending a channel establishing message to the node or the nodes which are intended to be receiver of data in the event that the node has received tokens corresponding to the requested capacity.

36. A circuit-switched network according to any one of claims 33-35, **characterized in** that one or several server nodes are arranged to make reservations for and to transfer tokens corresponding to all unutilized capacity to the requesting node in the event that the server nodes together do not have the requested capacity unutilized.

37. A circuit-switched network according to any one of claims 33-35, **characterized in** that one or several server nodes are arranged to not transfer any token to the requesting node in event that the server nodes together have not the requested capacity unutilized.

38. A circuit-switched network according to any one of claims 33-37, **characterized in** that a node is arranged to use a status table, a regularly updated list of the unutilized capacity of all the server nodes, for decision upon which server node to request tokens from.

## Patentansprüche

1. Verfahren zur zentralisierten Verwaltung der Kapazität in einem Wählbetrieb- bzw. Durchschalt-Netzwerk bzw. leitungsvermitteltes Netz mit einer Bus- oder Ringstruktur, welches Netzwerk eine Bandbreite verwendet, welche in Zyklen unterteilt wird, welche wiederum in Kontroll- bzw. Steuerzeitkanäle bzw. -slots für eine Signalisierung bzw. Signalübertragung und Datenzeitkanäle bzw. -slots für eine Übertragung von Daten unterteilt werden, und worin jedem Datenzeitslot ein Token bzw. codiertes Befehlswort zugeordnet wird,
dadurch gekennzeichnet,
- daß einem ersten Knoten, welcher Serverknoten genannt wird, Token entsprechend allen Datenzeitslots zugeordnet werden, welche in einer Richtung in einem Bus oder Ring strömen,
- daß ein zweiter Knoten Token entsprechend einer gewissen Kapazität von dem Serverknoten anfordert,
- daß der Serverknoten Reservierungen für Token durchführt und diese entsprechend der angeforderten Kapazität zu dem anderen Knoten in dem Fall, daß der Serverknoten die angeforderte Kapazität unbenutzt aufweist, übermittelt und
- daß die übertragenen Token zu dem Serverknoten rückübertragen und freigegeben werden, wenn entsprechende Datenzeitslots nicht für ein Übertragen von Daten des anderen Knotens während einer beträchtlichen bzw. vorbestimmten Zeitdauer verwendet wurden.

2. Verfahren nach Anspruch 1, dadurch gekennzeichnet, daß das Verfahren in einem Netzwerk des DTM-Typs (Dynamic Synchronous Transfer Mode) implementiert wird.

3. Verfahren nach Anspruch 1 oder 2, dadurch gekennzeichnet, daß übertragene Token zu dem Serverknoten rückübermittelt und freigegeben werden, wenn entsprechende Datenzeitslots nicht länger für ein Übertragen von Daten verwendet werden.

4. Verfahren nach einem der Ansprüche 1 bis 3, dadurch gekennzeichnet, daß als der Serverknoten der Knoten, welcher ein Drittel der Knoten stromaufwärts angeordnet und zwei Drittel der Knoten stromabwärts angeordnet hat, ausgewählt wird.

5. Verfahren zur verteilten Verwaltung der Kapazität in einem Wählbetrieb- bzw. Durchschalt-Netzwerk bzw. leitungsvermitteltes Netz mit einer Bus- oder Ringstruktur, worin die Bandbreite in Zyklen unterteilt wird, welche wiederum in Kontroll- bzw. Steuerzeitkanäle bzw. -slots für eine Signalübertragung und Datenzeitkanäle bzw. - slots für eine Übertragung von Daten unterteilt werden, und worin jedem Datenzeitslot ein Token bzw. codiertes Befehlswort (Schreibzugang) zugeordnet wird,
dadurch gekennzeichnet,
- daß wenigstens zwei Knoten, welche Serverknoten genannt werden, definiert werden, zwischen welchen Token entsprechend allen Datenzeitslots verteilt werden, welche in einer Richtung in einem Bus oder einem Ring strömen,
- daß ein Knoten Token entsprechend einer gewissen Kapazität von wenigstens einem der Serverknoten anfordert,
- daß dieser Serverknoten Reservierungen für Token durchführt und diese entsprechend der angeforderten Kapazität an den anfordernden Knoten in dem Fall überträgt, daß der Serverknoten die angeforderte Kapazität unbenutzt aufweist, und
- daß übertragene Token zu dem entsprechenden Serverknoten rückübermittelt und freigegeben werden, wenn entsprechende Datenzeitslots nicht für eine Datenübertragung während einer beträchtlichen bzw. vorbestimmten Zeitdauer verwendet wurden.

6. Verfahren nach Anspruch 5, dadurch gekennzeichnet, daß das Verfahren in einem Netzwerk des DTM-Typs (Dynamic Synchronous Transfer Mode) implementiert wird.

7. Verfahren nach Anspruch 5 oder 6, dadurch gekennzeichnet, daß mehrere Serverknoten gefragt werden, Reservierungen für Token durchführen und diese, welche gemeinsam der vollständig angefragten Kapazität entsprechen, zu dem anfragenden bzw. anfordernden Knoten in dem Fall übertragen, daß die Serverknoten gemeinsam die angeforderte Kapazität unbenutzt aufweisen.

8. Verfahren nach einem der Ansprüche 5 bis 7, dadurch gekennzeichnet, daß empfangene Token für ein Aufbauen bzw. Einrichten von Kanälen durch Senden einer Kanalaufbau bzw. -einrichtbotschaft an den Knoten oder die Knoten verwendet werden, welche als Empfänger von Daten in dem Fall bezeichnet werden, daß ein Knoten Token entsprechend der angeforderten Kapazität empfangen hat.

9. Verfahren nach einem der Ansprüche 5 bis 7, dadurch gekennzeichnet, daß einer oder mehrere Serverknoten Reservierungen für Token durchführen und diese entsprechend der gesamten der nicht verwendeten Kapazität zu dem anfordernden Knoten in dem Fall übertragen, daß die Serverknoten gemeinsam nicht die angeforderte Kapazität unbenutzt aufweisen.

10. Verfahren nach einem der Ansprüche 5 bis 7, dadurch gekennzeichnet, daß einer oder mehrere Serverknoten nicht Token an den anfordernden Knoten in dem Fall übertragen, daß die Serverknoten gemeinsam nicht die angeforderte Kapazität unbenutzt aufweisen.

11. Verfahren nach Anspruch 9 oder 10, dadurch gekennzeichnet, daß weitere Token durch einen Knoten in dem Fall angefordert werden, daß möglicherweise erhaltene Token nicht der angeforderten Kapazität entsprechen.

12. Verfahren nach Anspruch 9 oder 10, dadurch gekennzeichnet, daß in einem Knoten empfangene Token in dem Fall freigegeben werden, daß diese Token nicht der angeforderten Kapazität entsprechen.

13. Verfahren nach Anspruch 9 oder 10, dadurch gekennzeichnet, daß empfangene Token für einen Aufbau bzw. Einrichten von Kanälen durch Senden einer Kanalaufbau- bzw. -einrichtbotschaft an den Knoten oder die Knoten verwendet werden, welche als Empfänger von Daten in dem Fall bezeichnet werden, daß ein Knoten nicht Token entsprechend der angeforderten Kapazität erhalten hat.

14. Verfahren nach einem der Ansprüche 5 bis 13, dadurch gekennzeichnet, daß jeder Serverknoten regelmäßig Information betreffend seine Frei- bzw. Leerkapazität an den Rest der Knoten sendet und jeder Knoten in einer Statustabelle Information, welche von den anderen Knoten erhalten wird, speichert.

15. Verfahren nach einem der Ansprüche 5 bis 14, dadurch gekennzeichnet, daß ein Knoten Token von dem Serverknoten anfordert, welcher im Moment die meiste unbenützte Kapazität aufweist.

16. Verfahren nach einem der Ansprüche 5 bis 14, dadurch gekennzeichnet, daß ein Knoten Token von dem Serverknoten anfordert, welcher am nächsten liegt und im Moment die angeforderte Kapazität unbenutzt aufweist.

17. Verfahren nach Anspruch 15 oder 16, dadurch gekennzeichnet, daß der Serverknoten, von welchem Kapazität angefordert wird, durch eine Bezugnahme auf die Statustabelle gefunden wird.

18. Verfahren nach einem der Ansprüche 5 bis 17, dadurch gekennzeichnet, daß alle Knoten in einem Bus oder einem Ring als Serverknoten definiert werden und diesen wenigstens ein Token zugeordnet wird.

19. Verfahren nach Anspruch 18, dadurch gekennzeichnet, daß allen Knoten in einem Bus oder einem Ring dieselbe Anzahl von Token zugeordnet wird.

20. Verfahren nach einem der Ansprüche 5 bis 19, dadurch gekennzeichnet, daß übertragene Token zu dem entsprechenden Serverknoten rückübermittelt werden und freigegeben werden, wenn entsprechende Datenzeitslots nicht länger für eine Datenübertragung verwendet werden.

21. Verfahren nach einem der Ansprüche 5 bis 19, dadurch gekennzeichnet, daß übertragene Token freigegeben werden, wenn entsprechende Datenzeitslots nicht länger für eine Datenübertragung verwendet werden.

22. Verfahren nach einem der Ansprüche 1 bis 21, dadurch gekennzeichnet, daß aufeinander folgende Token in einem Knoten durch ein Token, welches Block-Token genannt wird, repräsentiert werden, welches als eine Zahl auf dem ersten Zeitslot in einer Reihe und die Gesamtanzahl der Zeitslots in der Reihe angezeigt bzw. angegeben wird.

23. Verfahren nach einem der Ansprüche 1 bis 22, dadurch gekennzeichnet, daß ein Token in wenigstens zwei Token entsprechend demselben Zeitslot, jedoch unterschiedlichen Segmenten unterteilt wird, wo sich ein Segment auf ein Teil eines Übertragungsmediums bezieht, welches wenigstens zwei Knoten verbindet.

24. Verfahren nach einem der Ansprüche 1 bis 23, dadurch gekennzeichnet, daß der Serverknoten in dem Fall, daß er verschiedene Zeitslot- oder Segmentfolge-Gruppen von Token für eine Auswahl unter diesen aufweist, Reservierungen für Token durchführt und diese übermittelt, welche von der kleinsten Gruppe von Zeitslot- oder Segmentfolge-Token stammen, welche eine Kapazitätsanforderung erfüllen, und worin die kleinste Gruppe als die Gruppe definiert ist, deren Produkt von Zeitslots und Segmenten mit vorbestimmter Gewichtung am geringsten ist.

25. Verfahren nach einem der Ansprüche 1 bis 24, dadurch gekennzeichnet, daß Gruppen von Token, welche wenigstens teilweise Segmentabfolgen sind, neu gruppiert werden, um die Anzahl von aufeinander folgenden Segmenten für jede Gruppe von Token auf Kosten der Anzahl von aufeinander folgenden Zeitslots zu maximieren.

26. Knotenkontroll- bzw. -steuereinheit in einen Knoten in einem Wählbetrieb- bzw. Durchschalt-Netzwerk bzw. leitungsvermitteltes Netz mit einer Bus- oder Ringstruktur, welches Netzwerk eine Bandbreite verwendet, welche in Zyklen unterteilt ist, welche wiederum in Kontroll- bzw. Steuerzeitkanäle bzw. -slots für eine Signalisierung bzw. Signalübertragung und Datenzeitkanäle bzw. -slots für eine Übertragung von Daten unterteilt sind, und worin jedem Datenzeitkanal bzw. -slot ein Token bzw. codiertes Befehlswort zugeordnet ist,
dadurch gekennzeichnet,
- daß der Knotensteuereinheit Token entsprechend einer vorbestimmten Anzahl von Datenzeitslots zugeordnet sind, welche in einer Richtung in einem Bus oder einem Ring strömen,
- daß die Knotensteuereinheit angeordnet bzw. ausgebildet ist, um Reservierungen für Token durchzuführen und diese an eine zweite Knotensteuereinheit in einem zweiten Knoten in dem Fall zu übertragen, daß sie eine Anforderung für Token von der zweiten Knotensteuereinheit erhält und daß sie die angeforderte Kapazität unbenutzt aufweist, und
- daß die zweite Knotensteuereinheit angeordnet bzw. ausgebildet ist, um die übertragenen Token zu der Knotensteuereinheit zurückzuübertragen und diese freizugeben, wenn entsprechende Datenzeitslots nicht für ein Übertragen von Daten der zweiten Knotensteuereinheit während einer beträchtlichen bzw. vorbestimmten Zeit verwendet wurden.

27. Knotensteuereinheit nach Anspruch 26, dadurch gekennzeichnet, daß das Netzwerk vom DTM-Typ (Dynamic Synchronous Transfer Mode) ist.

28. Knoten, welcher auch Serverknoten genannt wird, in einem Wählbetrieb- bzw. Durchschalt-Netzwerk bzw. leitungsvermitteltes Netz mit einer Bus- oder Ringstruktur, welches Netzwerk eine Bandbreite verwendet, welche in Zyklen unterteilt ist, welche wiederum in Kontroll- bzw. Steuerzeitkanäle bzw. -slots für eine Signalübertragung und Datenzeitkanäle bzw. -slots für eine Übertragung von Daten unterteilt sind, und worin jedem Datenzeitslot ein Token bzw. codiertes Befehlswort zugeordnet ist, gekennzeichnet durch eine Knotensteuereinheit, welcher Token entsprechend einer vorbestimmten Anzahl von Datenzeitslots zugeordnet sind, welche in einer Richtung in einem Bus oder Ring strömen, und welche angeordnet bzw. ausgebildet ist, um Reservierungen für Token durchzuführen und diese an eine zweite Knotensteuereinheit in einem zweiten Knoten in dem Fall zu übertragen, daß sie eine Anforderung für Token von der zweiten Knotensteuereinheit erhält und daß sie die angeforderte Kapazität unbenutzt aufweist.

29. Knoten nach Anspruch 28, dadurch gekennzeichnet, daß das Netzwerk vom DTM-Typ (Dynamic Synchronous Transfer Mode) ist.

30. Knoten nach Anspruch 28 oder 29, dadurch gekennzeichnet, daß dem Knoten Token entsprechend allen Datenzeitslots zugeordnet sind, welche in einer Richtung in einem Bus oder einem Ring strömen.

31. Knoten nach Anspruch 30, dadurch gekennzeichnet, daß der Knoten ein Drittel der Knoten der Bus- oder Ringstruktur stromaufwärts und zwei Drittel der Knoten der Bus- oder Ringstruktur stromabwärts aufweist.

32. Wählbetrieb- bzw. Durchschalt-Netzwerk bzw. leitungsvermitteltes Netz einer Bus- oder Ringstruktur, welches Netzwerk eine Bandbreite verwendet, welche in Zyklen unterteilt ist, welche wiederum in Kontroll- bzw. Steuerzeitkanäle bzw. -slots für eine Signalisierung bzw. Signalübertragung und Datenzeitkanäle bzw. -slots für eine Übertragung von Daten unterteilt sind, und worin jedem Datenzeitslot ein Token bzw. codiertes Befehlswort zugeordnet ist, gekennzeichnet durch einen Knoten, welcher auch Serverknoten genannt wird, welchem Token entsprechend einer vorbestimmten Anzahl von Datenzeitslots zugeordnet sind, welche in einer Richtung in einem Bus oder einem Ring strömen, und welcher angeordnet bzw. ausgebildet ist, um Reservierungen für Token durchzuführen und diese an einen zweiten Knoten in dem Fall zu übertragen, daß er eine Anforderung für Token von dem zweiten Knoten erhält und die angeforderte Kapazität unbenutzt aufweist.

33. Wählbetrieb- bzw. Durchschalt-Netzwerk bzw. leitungsvermitteltes Netz einer Bus- oder Ringstruktur, welches Netzwerk eine Bandbreite verwendet, welche in Zyklen unterteilt ist, welche wiederum in Kontroll- bzw. Steuerzeitkanäle bzw. -slots für eine Signalübertragung und Datenzeitkanäle bzw. -slots für eine Übertragung von Daten unterteilt sind, und worin jedem Datenzeitslot ein Token bzw. codiertes Befehlswort zugeordnet ist, dadurch gekennzeichnet, daß wenigstens zwei Knoten, welche Serverknoten genannt werden, definiert sind, zwischen welchen Token entsprechend allen Zeitdatenslots, welche in einer Richtung in einem Bus oder Ring strömen, verteilt sind, und daß die Serverknoten angeordnet bzw. ausgebildet sind, um Reservierungen für Token durchzuführen und diese an einen dritten Knoten in dem Fall zu übertragen, daß die Serverknoten eine Anforderung für Token von dem dritten Knoten erhalten und daß sie die angeforderte Kapazität unbenutzt aufweisen.

34. Durchschalt-Netzwerk nach Anspruch 32 oder 33, dadurch gekennzeichnet, daß das Netzwerk ein Netzwerk des DTM-Typs (Dynamic Synchronous Transfer Mode) ist.

35. Durchschalt-Netzwerk nach einem der Ansprüche 32 bis 34, dadurch gekennzeichnet, daß ein Knoten angeordnet ist, um erhaltene Token für einen Aufbau bzw. Einrichtung von Kanälen durch ein Senden einer Kanalaufbau- bzw. - einrichtbotschaft an den Knoten oder die Knoten, welche als Empfänger von Daten gedacht sind, in dem Fall zu verwenden, daß der Knoten Token entsprechend der angeforderten Kapazität erhalten hat.

36. Durchschalt-Netzwerk nach einem der Ansprüche 33 bis 35, dadurch gekennzeichnet, daß einer oder mehrere Serverknoten angeordnet sind, um Reservierungen für Token durchzuführen und diese entsprechend der gesamten unbenutzten Kapazität an den anfordernden Knoten in dem Fall zu übertragen, daß die Serverknoten gemeinsam nicht die angeforderte Kapazität unbenutzt aufweisen.

37. Durchschalt-Netzwerk nach einem der Ansprüche 33 bis 35, dadurch gekennzeichnet, daß einer oder mehrere Serverknoten angeordnet sind, um nicht jegliche Token zu dem anfordernden Knoten in dem Fall zu übertragen, daß die Serverknoten gemeinsam nicht die angeforderte Kapazität unbenutzt aufweisen.

38. Durchschalt-Netzwerk nach einem der Ansprüche 33 bis 37, dadurch gekennzeichnet, daß ein Knoten angeordnet ist, um eine Statustabelle, eine regelmäßig aktualisierte Liste der ungenutzten Kapazität von allen Serverknoten, für eine Entscheidung zu verwenden, von welchem Serverknoten Token anzufordern sind.

## Revendications

1. Méthode de gestion centralisée de la capacité dans un réseau à circuits commutés avec une structure à bus ou à anneau, lequel réseau utilise une largeur de bande qui est divisée en cycles, qui à leur tour sont divisés en créneaux de temps de contrôle pour la signalisation et en créneaux de temps de données pour le transfert de données, et dans laquelle chaque créneau de temps de données est associé à un jeton,
caractérisée
- en ce qu'à un premier noeud, appelé noeud serveur, sont affectés des jetons correspondant à tous les créneaux de temps de données qui circulent dans une direction dans un bus ou dans un anneau,
- en ce qu'un second noeud requiert des jetons correspondant à une certaine capacité du noeud serveur,
- en ce que le noeud serveur fait des réservations pour des jetons et transfère des jetons correspondant à la capacité nécessaire pour l'autre noeud, dans le cas où la capacité requise est inutilisée dans le noeud serveur, et
- en ce que les jetons transférés sont retransmis au noeud serveur et sont libérés, si les créneaux de temps de données correspondants n'ont pas été utilisés pour transférer des données de l'autre noeud durant un laps de temps important.

2. Méthode selon la revendication 1, caractérisée en ce que la méthode est mise en application dans un réseau de type DTM (Mode de Transfert Synchrone Dynamique).

3. Méthode selon la revendication 1 ou 2, caractérisée en ce que les jetons transférés sont retransmis au noeud serveur et sont libérés lorsque les créneaux de temps de données correspondants ne sont plus utilisés pour transférer des données.

4. Méthode selon l'une quelconque des revendications 1-3, caractérisée en ce que le noeud serveur est choisi comme étant le noeud ayant 1/3 des noeuds situés en amont et 2/3 des noeuds situés en aval.

5. Méthode de gestion répartie de la capacité dans un réseau à circuits commutés avec une structure à bus ou à anneau, dans laquelle la largeur de bande est divisée en cycles, qui à leur tour sont divisés en créneaux de temps de contrôle pour la signalisation et en créneaux de temps de données pour le transfert de données et dans laquelle chaque créneau de temps de données est associé à un jeton (accès d'écriture),
caractérisée
- en ce qu'au moins deux noeuds, appelés noeuds serveurs, sont définis entre ceux qui sont des jetons répartis correspondant à tous les créneaux de temps de données qui circulent dans une direction dans un bus ou dans un anneau,
- en ce qu'un noeud demande des jetons correspondant à une certaine capacité d'au moins l'un des noeuds serveurs,
- en ce que ce noeud serveur fait des réservations pour des jetons et transfère au noeud requérant des jetons correspondant à la capacité nécessaire, dans le cas où la capacité requise est inutilisée dans le noeud serveur, et
- en ce que les jetons transférés sont retransmis au noeud serveur respectif et sont libérés, si les créneaux de temps de données correspondants n'ont pas été utilisés pour transférer des données durant un laps de temps important.

6. Méthode selon la revendication 5, caractérisée en ce que la méthode est mise en application dans un réseau de type DTM (Mode de Transfert Synchrone Dynamique).

7. Méthode selon la revendication 5 ou 6, caractérisée en ce que plusieurs noeuds serveurs sont demandés, font des réservations pour des jetons et transfèrent au noeud demandeur des jetons, qui correspondent ensemble à la capacité totale requise, dans le cas où la capacité requise est inutilisée dans l'ensemble des noeuds serveurs.

8. Méthode selon l'une quelconque des revendications 5-7, caractérisée en ce que des jetons reçus sont utilisés pour installer des canaux en envoyant au noeud ou aux noeuds, qui sont désignés comme récepteurs de données, un message d'installation de canaux, dans le cas où un noeud a reçu des jetons correspondant à la capacité requise.

9. Méthode selon l'une quelconque des revendications 5-7, caractérisée en ce qu'un ou plusieurs noeuds serveurs font des réservations pour des jetons et transfèrent au noeud demandeur des jetons, qui correspondent à la totalité de la capacité inutilisée, dans le cas où la capacité requise n'est pas inutilisée dans l'ensemble des noeuds serveurs.

10. Méthode selon l'une quelconque des revendications 5-7, caractérisée en ce qu'un ou plusieurs noeuds serveurs ne transfèrent aucun jeton au noeud demandeur, dans le cas où la capacité requise n'est pas inutilisée dans l'ensemble des noeuds serveurs.

11. Méthode selon la revendication 9 ou 10, caractérisée en ce que d'autres jetons sont requis par un noeud, dans le cas où les jetons éventuellement reçus ne correspondent pas à la capacité requise.

12. Méthode selon la revendication 9 ou 10, caractérisée en ce que les jetons reçus dans un noeud sont libérés, dans le cas où ces jetons ne correspondent pas à la capacité requise.

13. Méthode selon la revendication 9 ou 10, caractérisée en ce que des jetons reçus sont utilisés pour installer des canaux en envoyant au noeud ou aux noeuds, qui sont désignés comme récepteurs de données, un message d'installation de canaux, dans le cas où un noeud n'a pas reçu de jetons correspondant à la capacité requise.

14. Méthode selon l'une quelconque des revendications 5-13, caractérisée en ce que chaque noeud serveur envoie régulièrement au reste des noeuds des informations concernant sa capacité inoccupée et en ce que chaque noeud mémorise les informations reçues des autres noeuds dans une table d'état.

15. Méthode selon l'une quelconque des revendications 5-14, caractérisée en ce qu'un noeud requiert des jetons de la part du noeud serveur qui dispose pour le moment de la capacité inutilisée la plus importante.

16. Méthode selon l'une quelconque des revendications 5-14, caractérisée en ce qu'un noeud requiert des jetons de la part du noeud serveur qui est le plus proche et dans lequel la capacité requise est inutilisée pour le moment.

17. Méthode selon la revendication 15 ou 16, caractérisée en ce que le noeud serveur auquel la capacité est demandée peut être trouvé en se référant à la table d'état.

18. Méthode selon l'une quelconque des revendications 5-17, caractérisée en ce que tous les noeuds dans un bus ou un anneau sont définis comme noeuds serveurs et qu'il leur est affecté au moins un jeton.

19. Méthode selon la revendication 18, caractérisée en ce que dans un bus ou un anneau le même nombre de jetons est affecté à tous les noeuds.

20. Méthode selon l'une quelconque des revendications 5-19, caractérisée en ce que les jetons transférés sont retransmis aux noeuds serveurs respectifs et sont libérés lorsque les créneaux de temps de données correspondants ne sont plus utilisés pour le transfert de données.

21. Méthode selon l'une quelconque des revendications 5-19, caractérisée en ce que les jetons transférés sont libérés lorsque les créneaux de temps de données correspondants ne sont plus utilisés pour le transfert de données.

22. Méthode selon l'une quelconque des revendications 1-21, caractérisée en ce que les jetons consécutifs dans un noeud sont représentés par un jeton appelé jeton bloc, qui est indiqué comme un numéro du premier créneau de temps dans une rangée et le nombre total de créneaux de temps dans la rangée.

23. Méthode selon l'une quelconque des revendications 1-22, caractérisée en ce qu'un jeton est divisé en au moins deux jetons correspondant au même créneau de temps, mais à des segments différents, un segment se rapportant à une partie d'un moyen de transmission qui connecte au moins deux noeuds.

24. Méthode selon l'une quelconque des revendications 1-23, caractérisée en ce que, dans le cas où il dispose de plusieurs groupes de jetons à créneaux de temps ou à segments consécutifs, parmi lesquels il peut choisir, le noeud serveur fait des réservations pour des jetons et transfère les jetons qui proviennent du groupe le moins important de jetons à créneaux de temps ou à segments consécutifs et qui correspond à une demande de capacité et dans laquelle le groupe le moins important est défini comme étant le groupe dont le produit des créneaux de temps et des segments ayant des importances prédéterminées est le plus bas.

25. Méthode selon l'une quelconque des revendications 1-24, caractérisée en ce que des groupes de jetons, qui sont au moins partiellement à segments consécutifs, sont regroupés pour agrandir le nombre de segments consécutifs pour chaque groupe de jetons et l'ampleur du nombre de créneaux de temps consécutifs.

26. Unité de contrôle de noeuds dans un noeud dans un réseau à circuits commutés avec une structure à bus ou à anneau, lequel réseau utilise une largeur de bande qui est divisée en cycles, qui à leur tour sont divisés en créneaux de temps de contrôle pour la signalisation et en créneaux de temps de données pour le transfert de données et dans laquelle chaque créneau de temps de données est associé à un jeton, caractérisée
- en ce qu'à l'unité de contrôle de noeuds sont affectés des jetons correspondant à un nombre prédéterminé de créneaux de temps de données qui circulent dans une direction dans un bus ou dans un anneau,
- en ce que l'unité de contrôle de noeuds est agencée pour faire des réservations pour des jetons et pour transférer des jetons à une seconde unité de contrôle de noeuds dans un second noeud, dans le cas où elle reçoit une demande pour des jetons de la part de la seconde unité de contrôle de noeuds et qu'elle dispose de la capacité requise non utilisée et
- en ce que la seconde unité de contrôle de noeuds est agencée pour retransmettre les jetons transférés à l'unité de contrôle de noeuds et pour les libérer, si les créneaux de temps de données correspondants n'ont pas été utilisés pour transférer des données de la seconde unité de contrôle de noeuds durant un laps de temps important.

27. Unité de contrôle de noeuds selon la revendication 26, caractérisée en ce que le réseau est du type DTM (Mode de Transfert Synchrone Dynamique).

28. Noeud, également appelé noeud serveur, dans un réseau à circuits commutés avec une structure à bus ou à anneau, lequel réseau utilise une largeur de bande qui est divisée en cycles, qui à leur tour sont divisés en créneaux de temps de contrôle pour la signalisation et en créneaux de temps de données pour le transfert de données et dans lequel chaque créneau de temps de données est associé à un jeton, caractérisé par une unité de contrôle de noeuds à laquelle sont affectés des jetons correspondant à un nombre prédéterminé de créneaux de temps de données qui circulent dans une direction dans un bus ou dans un anneau et qui est agencée pour faire des réservations pour des jetons et pour transférer des jetons à une seconde unité de contrôle de noeuds dans un second noeud, dans le cas où elle reçoit une demande pour des jetons de la part de la seconde unité de contrôle de noeuds et qu'elle dispose de la capacité requise non utilisée.

29. Noeud selon la revendication 28, caractérisé en ce que le réseau est du type DTM (Mode de Transfert Synchrone Dynamique).

30. Noeud selon la revendication 28 ou 29, caractérisé en ce qu'au noeud sont affectés des jetons correspondant à tous les créneaux de temps de données qui circulent dans une direction dans un bus ou dans un anneau.

31. Noeud selon la revendication 30, caractérisé en ce qu'un tiers des noeuds du bus ou de l'anneau est situé en amont et deux tiers des noeuds du bus ou de l'anneau est situé en aval.

32. Réseau à circuits commutés d'une structure à bus ou à anneau, lequel réseau utilise une largeur de bande qui est divisée en cycles, qui à leur tour sont divisés en créneaux de temps de contrôle pour la signalisation et en créneaux de temps de données pour le transfert de données et dans lequel chaque créneau de temps de données est associé à un jeton, caractérisé par un noeud, également appelé noeud serveur, auquel sont affectés des jetons correspondant à un nombre prédéterminé de créneaux de temps de données qui circulent dans une direction dans un bus ou dans un anneau et qui est agencé pour faire des réservations pour des jetons et pour transférer des jetons à un second noeud, dans le cas où il reçoit une demande pour des jetons de la part du second noeud et qu'il dispose de la capacité requise non utilisée.

33. Réseau à circuits commutés d'une structure à bus ou à anneau, lequel réseau utilise une largeur de bande qui est divisée en cycles, qui à leur tour sont divisés en créneaux de temps de contrôle pour la signalisation et en créneaux de temps de données pour le transfert de données et dans lequel chaque créneau de temps de données est associé à un jeton, caractérisé en ce qu'au moins deux noeuds, appelés noeuds serveurs, sont définis parmi ceux dans lesquels des jetons correspondant à tous les créneaux de temps de données, qui circulent dans une direction dans un bus ou dans un anneau, sont distribués et en ce que les noeuds serveurs sont agencés pour faire des réservations pour des jetons et pour transférer des jetons à un troisième noeud, dans le cas où les noeuds serveurs reçoivent une demande pour des jetons de la part du troisième noeud et qu'ils disposent de la capacité requise non utilisée.

34. Réseau à circuits commutés selon la revendication 32 ou 33, caractérisé en ce que le réseau est du type DTM (Mode de Transfert Synchrone Dynamique).

35. Réseau à circuits commutés selon l'une quelconque des revendications 32-34, caractérisé en ce qu'un noeud est agencé pour utiliser des jetons reçus pour installer des canaux en envoyant au noeud ou aux noeuds, qui sont désignés comme récepteurs de données, un message d'installation de canaux, dans le cas où le noeud a reçu des jetons correspondant à la capacité requise.

36. Réseau à circuits commutés selon l'une quelconque des revendications 33-35, caractérisé en ce qu'un ou plusieurs noeuds serveurs sont agencés pour faire des réservations pour des jetons et pour transférer au noeud demandeur des jetons, qui correspondent à la totalité de la capacité inutilisée, dans le cas où l'ensemble des noeuds serveurs ne disposent pas la capacité requise non utilisée.

37. Réseau à circuits commutés selon l'une quelconque des revendications 33-35, caractérisé en ce qu'un ou plusieurs noeuds serveurs sont agencés pour ne transférer aucun jeton au noeud demandeur, dans le cas où l'ensemble des noeuds serveurs ne disposent pas la capacité requise non utilisée.

38. Réseau à circuits commutés selon l'une quelconque des revendications 33-37, caractérisé en ce qu'un noeud est agencé pour utiliser une table d'état, c'est-à-dire une liste régulièrement mise à jour de la capacité inutilisée de tous les noeuds serveurs, pour décider à quels noeuds serveurs doivent être demandés des jetons.
